# EUROPEAN PATENT APPLICATION

(11) **EP 4 195 140 A1**
(43) Date of publication of application: **14.06.2023**
(21) Application number: 21854147.2
(22) Date of filing: 05.08.2021
(51) Int. Cl.: G06Q 50/10, G06F 21/60, G06F 21/62

(54) **TERMINAL DEVICE, INFORMATION PROCESSING SYSTEM, AND PROGRAM**

(30) Priority: 06.08.2020 JP 2020134030; 11.03.2021 JP 2021039129
(71) Applicant: Jasmy Incorporated, Tokyo 107-0061 (JP)
(72) Inventor: SATO, Kazumasa, Tokyo 107-0061 (JP); HAGIWARA, Takashi, Tokyo 107-0061 (JP); SAKAMOTO, Manabu, Tokyo 107-0061 (JP); YASUTOMI, Hiroshi, Tokyo 107-0061 (JP); MINOSHIMA, Toshikazu, Tokyo 107-0061 (JP)
(74) Representative: AWA Sweden AB
(86) International application number: PCT/JP2021/029064
(87) International publication number: WO 2022/030570

(57) **Abstract**

A terminal device 100 has a storage unit 180 storing a first personally identifiable information; and an operation unit 121 for inputting second personally identifiable information that is associated with the first personally identifiable information stored in the storage unit, that has lower specificity than the first personally identifiable information, and that can be browsed at a providing destination. The terminal device 100 provides the second personally identifiable information to the providing destination.

## Description

### Technical Field

The present invention relates to a terminal device, an information processing apparatus, an information processing method, and a program that handle personal information.

### Background Art

In recent years, in companies, handling of personal information is generally strictly managed. As a technique for protecting such personal information, for example, JP 2014-238642 A and the like can be exemplified, and in JP 2014-238642 A, a personal information protection device including an image processing unit that divides image data into areas including each piece of personal information, a protection pattern requesting unit that selects and inputs a protection pattern as to whether or not to encrypt personal information area data related to each divided image data, and a personal information processing unit that encrypts the personal information area data in a case where the selected input is a protection pattern of encrypting the personal information area data is proposed.

### SUMMARY OF INVENTION

### PROBLEM TO BE SOLVED BY INVENTION

The present invention provides an information processing apparatus and the like that share personal information from a concept completely different from the prior art.

### MEANS FOR SOLVING PROBLEM

A terminal device according to the present invention may comprise:
a storage unit storing a first personally identifiable information; and
an operation unit for inputting second personally identifiable information that is associated with the first personally identifiable information stored in the storage unit, that has lower specificity than the first personally identifiable information, and that can be browsed at a providing destination,
wherein the terminal device may provide the second personally identifiable information to the providing destination.

In the terminal device according to the present invention,
the first personally identifiable information may be associated with a plurality of pieces of second personally identifiable information having different specificities.

In the terminal device according to the present invention,
a display may display the first personally identifiable information and the second personally identifiable information simultaneously.

The terminal device according to the present invention may further comprise:
a conversion unit that converts the first personally identifiable information into the second personally identifiable information,
the first personally identifiable information may have a plurality of first personal identification elements,
the second personally identifiable information may have a plurality of second personal identification elements, and
the conversion unit may adjust a lowness of specificity for each first personal identification element and then may convert the first personal identification element into the second personal identification element.

In the terminal device according to the present invention,
a display unit may display whether the providing destination is in a state where the second personally identifiable information can be browsed.

In the terminal device according to the present invention,
reliability specifying information for indicating whether information from a third party is reliable may be input by the operation unit, and
the reliability specifying information may be displayed on a display unit when information is received from the third party using the second personally identifiable information of the third party.

The terminal device according to the present invention may further comprise:
a recording unit recording the second personally identifiable information that is encrypted in a blockchain.

The terminal device according to the present invention may further comprise:
a transmission unit transmits the second personally identifiable information that is encrypted by an encryption key to an information processing apparatus; and
a recording unit recording the encryption key in a blockchain.

In the terminal device according to the present invention,
the first personally identifiable information may include information on an owned device owned by a provider.

In the terminal device according to the present invention,
a plurality of pieces of avatar information may be associated with a plurality of pieces of second personally identifiable information having different specificities, and
when an operation is performed using a certain avatar information, information may be provided using the second personally identifiable information associated with the certain avatar information.

In the terminal device according to the present invention,
the second personally identifiable information may be browsed at the providing destination by transmitting the second personally identifiable information to the providing destination, recording the second personally identifiable information in a blockchain, or sharing the second personally identifiable information stored in an information processing apparatus with the providing destination.

The terminal device according to the present invention may further comprise:
a recording unit that records the second personally identifiable information in a blockchain or an information processing apparatus.

An information processing system according to the present invention may be an information processing system comprising the above terminal device,
when shared information including the second personally identifiable information, position information or experience information is provided from a terminal device of a providing source to a terminal device of the providing destination, points or currency may be granted from the providing destination to the providing source.

An information processing system according to the present invention may be an information processing system comprising the above terminal device,
the information processing system may control that the second personally identifiable information cannot be browsed at the providing destination in response to an input from the operation unit.

An information processing system according to the present invention may be an information processing system comprising the above terminal device; and an information processing apparatus,
wherein the information processing apparatus may include a matching unit for performing matching based on the second personally identifiable information that will be provided or that have been provided from the terminal devices when the information processing apparatus receives a ride-sharing request from the terminal devices.

An information processing system according to the present invention may comprise:
a first terminal device being the above terminal device and storing first personal information including the first personally identifiable information;
a second terminal device capable of browsing second personal information that is less specific than the first personal information; and
a matching unit that performs matching using the second personal information.

In the information processing system according to the present invention,
a part or all of first personal information stored in a storage unit of a first terminal device may be stored in an information processing apparatus or recorded in a blockchain, and
the information processing system may comprise a matching unit for performing matching based on request information from a second terminal device and the first personal information stored in the information processing apparatus or recorded in the blockchain.

In the information processing system according to the present invention,
when the matching unit determines that matching has been made, information indicating an external user that has provided request information may be displayed on a display unit of the first terminal device.

In the information processing system according to the present invention,
the first personal information may include a plurality of first personal information elements, and
when the first personal information element is selected in the first terminal device, this first personal information element may be browsed on the second terminal device.

A program according to the present invention may be a program installed in a terminal device,
the terminal device in which the program is installed may comprise:
a storage function for storing a first personally identifiable information; and
an operation function for inputting second personally identifiable information that is associated with the first personally identifiable information stored in the storage function, that has lower specificity than the first personally identifiable information, and that can be browsed at a providing destination,
wherein the terminal device has a function for providing the second personally identifiable information to the providing destination.

### EFFECT OF INVENTION

According to an aspect of the present invention, an information processing apparatus and the like that share personal information from a concept completely different from the prior art can be provided.

### BRIEF DESCRIPTION OF FIGURES

Fig. 1 is a schematic block diagram of an information processing system according to a first embodiment of the present invention.
Fig. 2 is a schematic block diagram of an information processing system different from that in Fig. 1.
Fig. 3 is a diagram illustrating an example of screen display of a terminal device used in the first embodiment of the present invention.
Fig. 4 is a diagram illustrating an aspect of selecting reliability specifying information in the terminal device used in the first embodiment of the present invention.
Fig. 5 is a diagram illustrating an aspect in which reliability specifying information is displayed on the terminal device used in the first embodiment of the present invention.
Fig. 6 is a diagram illustrating screen display when a point is granted to the terminal device used in the first embodiment of the present invention.
Fig. 7 is a diagram in which information regarding home time is displayed on the terminal device used in the first embodiment of the present invention.
Fig. 8 is a diagram illustrating an aspect in which information such as personal information, telephone information, and payment information is displayed on the terminal device used in the first embodiment of the present invention.
Fig. 9 is a diagram illustrating an aspect in which information when various services are provided is displayed on the terminal device used in the first embodiment of the present invention.
Fig. 10 is a diagram illustrating an aspect of providing a first personal identification element in the terminal device used in the first embodiment of the present invention.
Fig. 11 is a diagram illustrating an aspect of selecting avatar information (persona) in the terminal device used in the first embodiment of the present invention.
Fig. 12 is a diagram illustrating an aspect of performing shared ride by the terminal device used in the first embodiment of the present invention.
Fig. 13 is a diagram illustrating an aspect of sharing an experience in the terminal device used in the first embodiment of the present invention.
Fig. 14 is a diagram illustrating an aspect of using points as points/currency in the terminal device used in the first embodiment of the present invention.
Fig. 15 is a diagram illustrating an example of an aspect including evaluation or the like of a restaurant as experience information in the terminal device used in the first embodiment of the present invention.
Fig. 16 is a diagram illustrating another example of an aspect including evaluation or the like of a restaurant as experience information in the terminal device used in the first embodiment of the present invention.
Fig. 17 is a view illustrating an aspect of making a reservation for a restaurant in the terminal device used in the first embodiment of the present invention.
Fig. 18 is a diagram illustrating an example of an aspect when the terminal device used in the first embodiment of the present invention communicates with a center that provides after-sales service for home appliances.
Fig. 19 is a diagram illustrating another example of an aspect when the terminal device used in the first embodiment of the present invention communicates with a center that provides after-sales service for home appliances.
Fig. 20 is a diagram illustrating an aspect in which a predetermined icon is displayed in an application corresponding to a target application in the terminal device used in the first embodiment of the present invention.
Fig. 21 is a diagram illustrating an aspect when an owned device of an electrical appliance or the like is registered by the terminal device used in the first embodiment of the present invention.
Fig. 22 is a diagram illustrating an example when second personally identifiable information is generated from first personally identifiable information by the terminal device used in the first embodiment of the present invention.
Fig. 23 is a diagram illustrating an aspect of displaying provided second personally identifiable information in the terminal device used in the first embodiment of the present invention.
Fig. 24 is a schematic block diagram for explaining an aspect using an external storage unit unlike Fig. 2.
Fig. 25 is a schematic block diagram of an information processing system according to a second embodiment and a third embodiment of the present invention.
Fig. 26 is a diagram illustrating an example of screen display of a terminal device used in the second embodiment of the present invention.
Fig. 27 is a diagram for explaining an aspect in which a first personal information element can be browsed on a second terminal device by dragging and dropping the first personal information element.
Fig. 28 is a diagram illustrating that a point is granted as a result of dragging and dropping the first personal information element.
Fig. 29 is a diagram illustrating another example of the display aspect in a first terminal device.
Fig. 30 is a schematic block diagram for explaining an aspect in which matching is performed by a device matching unit provided in an information processing apparatus.

### EMBODIMENT OF THE INVENTION

### First Embodiment

In the present embodiment, not only an information processing apparatus, an information processing system, and a program but also a recording medium including a USB or the like for recording the program, and an information processing method using the information processing apparatus and the information processing system are provided. In the present embodiment, "or" also includes the meaning of "and". That is, for example, in the present embodiment, "A or B" means any of "A, B, and A and B".

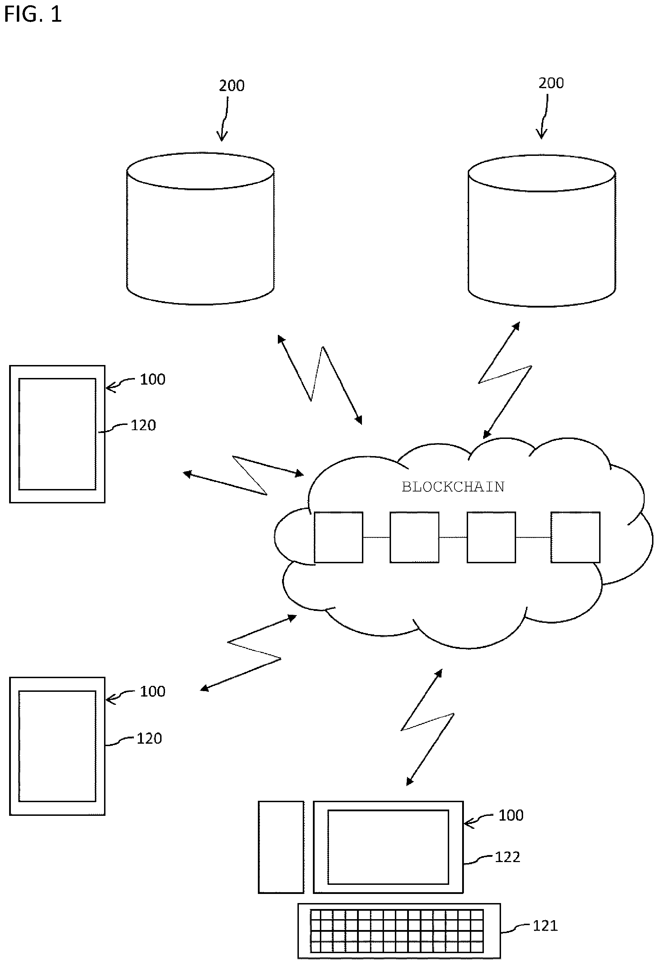

As illustrated in Fig. 1, an information processing system of the present embodiment may have a plurality of terminal devices 100 and an information processing apparatus 200 capable of communicating with the terminal devices 100. Each of the terminal devices 100 is typically a smartphone, a tablet, a personal computer, or the like. The information processing apparatus 200 is typically a server. The information processing apparatus 200 of the present embodiment may include one apparatus or a plurality of apparatuses. Furthermore, in a case where the information processing apparatus 200 includes a plurality of devices, each device does not need to be provided in the same space such as the same room, and may be provided in different rooms, different buildings, different regions, or the like, or an administrator or an owner may be different.

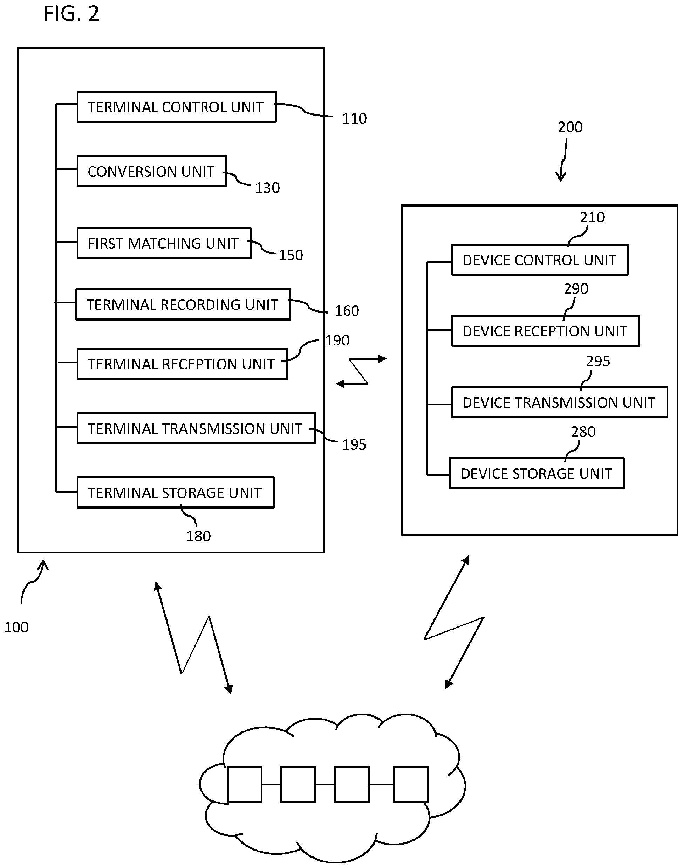

As illustrated in Fig. 2, the terminal device 100 may have a terminal reception unit (reception unit) 190 that receives information from an external device such as the information processing apparatus 200, a terminal transmission unit (transmission unit) 195 that transmits information to the external device such as the information processing apparatus 200, and a terminal control unit 110 that performs various controls. The information processing apparatus 200 may have a device reception unit (reception unit) 290 that receives first personally identifiable information, second personally identifiable information, and the like from the terminal device 100, a device storage unit (storage unit) 280 that stores the first personally identifiable information and the second personally identifiable information in association with each other, a device transmission unit (transmission unit) 295 that transmits the second personally identifiable information to a transmission destination, and a device control unit 210 that performs various controls.

The terminal device 100 may have an operation unit 121 for inputting first personally identifiable information recorded or managed by the terminal device 100, and second personally identifiable information that is associated with the first personally identifiable information, has lower specificity than the first personally identifiable information, and can be browsed at a providing destination, and a display unit 122 capable of displaying the first personally identifiable information and the second personally identifiable information. The terminal device 100 may be made in a state of being browsable at the providing destination by providing the second personally identifiable information. The "provision" of information in the present application is a concept including both an aspect of "transmitting" information and an aspect of "sharing" information. The state of being browsable at the providing destination includes a state in which information itself is provided to the providing destination or information is shared by the information processing apparatus 200 or the like such as a server. Such information may be provided by being recorded in a blockchain by a recording unit 160, may be provided by being recorded in the information processing apparatus 200 by the recording unit 160, or may be provided by being transmitted to a providing destination by e-mail or the like. When the second personally identifiable information recorded in the information processing apparatus 200 is shared, input or transmission of permission to share the second personally identifiable information with the providing destination may be performed from the terminal device 100 to the information processing apparatus 200. Unless such permission is given, sharing of the second personally identifiable information with a third party may not be performed.

The lowness of specificity means abstraction (partitioning). When a degree of abstraction increases, it becomes difficult to specify the individual. In the case of adopting an aspect in which the first personally identifiable information is recorded or managed only by the terminal device 100, since there is basically no leakage to an external device such as the information processing apparatus 200, personal information can be protected. In the past, information was deposited in a central server or the like (deposit type), and the subsequent use of the information was left to a third party. In this aspect, there is a risk that the information is leaked in a case where the central server is attacked. However, according to the present aspect, it is possible to fundamentally prevent occurrence of such a risk. Furthermore, it is advantageous in that the administrator of the system does not need to manage personal information, and it is also advantageous in that the provided second personally identifiable information is easy to handle as long as the second personally identifiable information is not provided limited to a specific use since the second personally identifiable information is provided by a person himself/herself with permission for use.

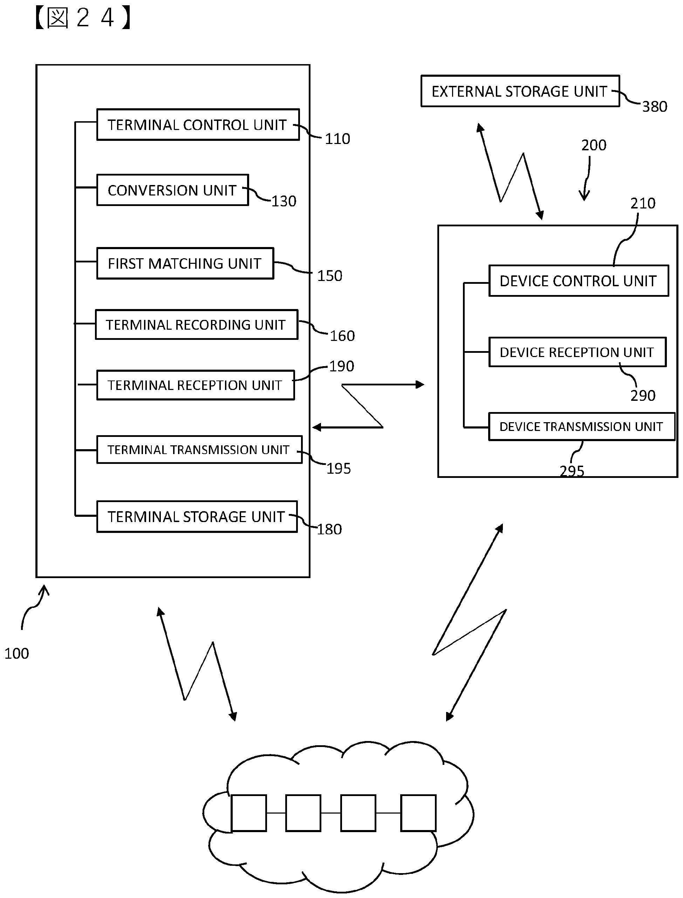

The terminal device 100 may install and generate an application (Hereinafter, the application is referred to as a "target application".). The target application may be obtained by being downloaded from a server or the like, or may be obtained by other means such as USB or e-mail. In the terminal device 100, the display unit 122 and the operation unit 121 may be integrated into an operation display unit 120. Typically, in a case where the terminal device 100 includes a smartphone, a tablet, or the like, the terminal device is a touch panel, and the operation display unit 120 is adopted. Hereinafter, a description will be given mainly using an aspect in which the operation display unit 120 is adopted, but the present invention is not limited to such an aspect, and the display unit 122 and the operation unit 121 may be separate. The terminal device 100 also has a terminal storage unit (storage unit) 180 that stores various information including the target application. The terminal storage unit 180 may store the first personally identifiable information and one or a plurality of pieces of second personally identifiable information in association with each other. In the present embodiment, the description will be given using the terminal storage unit 180 provided in the terminal device 100, but the present invention is not limited to such an aspect, and an aspect in which the first personally identifiable information and one or a plurality of pieces of second personally identifiable information are stored in association with each other using an external storage unit 380 (see Fig. 24) provided in an external device such as a server or a cloud may be used. As an example, a predetermined region of the external storage unit 380 provided in the external device may be allocated to each individual, and individual information may be stored using the region of the storage unit. This information is allocated to each individual, and is basically in a form that cannot be viewed by a third party. Furthermore, the external storage unit 380 may include an application or a library that can be operated by the terminal device 100. The method includes utilizing a virtualization technology or a container technology.

The second personally identifiable information is provided to a providing destination (transmission destination/sharing destination) designated by a providing source (transmission source/sharing source). The recording unit 160 of the terminal device 100 may write the second personally identifiable information encrypted using a public key of the providing destination in the blockchain. According to this aspect, only the providing destination having a private key can decrypt the second personally identifiable information written in the blockchain. Therefore, confidentiality can be maintained even when the second personally identifiable information having high specificity is provided. Furthermore, since information cannot be rewritten by using the blockchain, high credibility can be provided.

Furthermore, the terminal transmission unit (transmission unit) 195 of the terminal device 100 may transmit the second personally identifiable information encrypted using an encryption key to the information processing apparatus 200. At this time, the recording unit 160 may write information (encryption key information) regarding the encryption key in the blockchain using a public key of the providing destination. According to this aspect, only the providing destination having a private key can decrypt the encryption key written in the blockchain. Also in this aspect, high credibility can be imparted. In a case where the information processing apparatus 200 is distributed to a plurality of apparatuses (typically, in a case where the information processing apparatus includes a distributed server), the address of the apparatus storing the provided second personally identifiable information may also be encrypted using a public key of the providing destination. When such an aspect is adopted, which device (address) stores the second personally identifiable information is also encrypted, so that higher security can be realized.

In the blockchain, a block that is a group of transactions (transaction information) is created by encryption, and the blocks are connected by a chain, whereby the transaction is recorded. Hashing at the time of recording in the blockchain is performed by, for example, a secure hash algorithm 256-bit (SHA256). Furthermore, writing to the blockchain may be performed using, for example, a private key of a person who performs writing (providing source/sender) and an electronic signature (digital signature) using a public key. As an example, in a case where an electronic signature is performed using a blockchain, original data, data obtained by encrypting data obtained by hashing the original data using a private key of a person who writes the data, and a public key corresponding to the private key may be recorded in the blockchain. When the blockchain is read, by confirming that the data obtained by hashing the original data matches the data decrypted with the public key, it is possible to confirm that the person who recorded the data is a valid recorder. Such an electronic signature may be used when virtual currency to be described later is transferred.

As the blockchain, any of a public type, a consortium type, a private type, and the like may be used. When the public type is used, mining is performed. On the other hand, in the case of using the consortium type, mining is not performed, and consensus building is performed by consensus among specific persons. In the case of using the private type, mining is not performed, and consensus building is performed by internal approval of the organization. Note that, in a case where the consortium type is used, although there is a blockchain administrator, it is advantageous in that it is not centralized. When the consortium type is used, for example, Hyperledger Fabric may be used. In the case of using the consortium type, the target application corresponds to an application (Hereinafter, the application is also referred to as a "compatible application".) developed by a company participating in the consortium, and the target application may be used together when the compatible application is used.

In the present embodiment, an aspect not using a blockchain can also be adopted. For example, the second personally identifiable information encrypted using an encryption key may be stored in the device storage unit 280 of the information processing apparatus 200, and the providing destination (transmission destination/sharing destination) having a decryption key may decrypt the second personally identifiable information and browse the second personally identifiable information. Furthermore, the second personally identifiable information encrypted using an encryption key may be provided to the providing destination, and the providing destination may decrypt the second personally identifiable information using a decryption key and browse the second personally identifiable information. The encryption key may be designated from the providing destination, or may be encrypted by the providing source using an encryption key designated by the providing source, and the encryption key may be separately transmitted to the providing destination by e-mail or the like.

The exchange between the plurality of terminal devices 100 using the target application and the exchange between the terminal device 100 and the information processing apparatus 200 using the target application may be recorded in the blockchain by the recording unit 160. By being recorded in the blockchain in this manner, reliability of information can be enhanced.

The terminal device 100 may be able to create various types of second personally identifiable information having different specificities. As an example, low-level identification information with a low level of specificity may be browsable for the company A, and high-level identification information with a high level of specificity may be browsable for the company B. The adjustment of the specificity (granularity) can be determined by each provider (user).

The terminal device 100 may have a conversion unit 130 that automatically converts the first personally identifiable information into the second personally identifiable information (see Fig. 2). When such an aspect is adopted, it is advantageous in that the second personally identifiable information can be automatically created from the first personally identifiable information with a certain granularity.

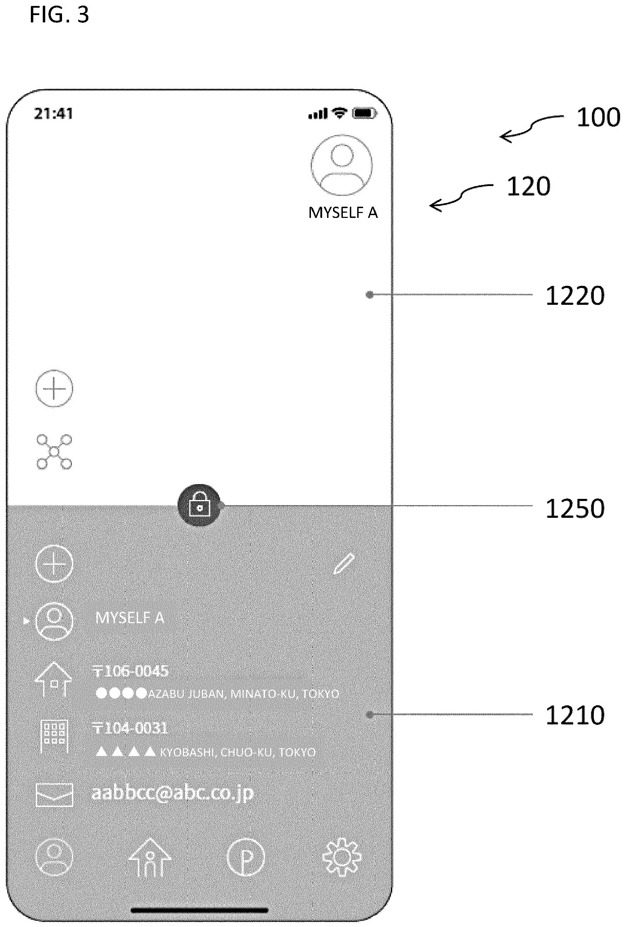

The first personally identifiable information may have a plurality of first personal identification elements. The second personally identifiable information may have a plurality of second personal identification elements. The conversion unit 130 may adjust the lowness of specificity for each first personal identification element and then convert the first personal identification element into the second personal identification element. Each of the first personal identification elements and each of the second personal identification elements may correspond to each other on a one-to-one basis. The first personally identifiable information may include, as the first personal identification element, a name, an age, an address, a place of employment, a telephone number, an e-mail address, a sex, a date of birth, a Social Security and Tax Number, a driver's license number, a passport number, a credit card number, a face photograph, biological information such as a fingerprint, iris information, and vein information. The second personal identification element may be obtained by converting these first personal identification elements into information with low specificity. The first personally identifiable information may include a handle name ("mustache glasses" in Fig. 3). This handle name may not be converted into the second personal identification element. When highly specific information such as a Social Security and Tax Number, a driver's license number, and a passport number is used as the second personal identification element, the second personally identifiable information (for example, "mustache glasses") including the second personal identification element and another second personally identifiable information (for example, "mustache glasses") are associated with each other through the first personally identifiable information, the identification information of the terminal device 100 (ID information of the mobile terminal), and the like. As a result, the credibility of the other second personally identifiable information can be enhanced, and for example, the credibility of the information can be guaranteed by the administrator who manages the system. In a case where the driver's license number, the passport number, or the like is provided, face authentication may be used, and a result of the face photograph of the driver's license or the passport and the face authentication may also be provided to the providing destination. When the face authentication is performed, a moving image may be used.

The operation display unit 120 may be capable of simultaneously displaying both the first personally identifiable information and the second personally identifiable information. When such an aspect is adopted, the content of the second personally identifiable information browsable at the providing destination can be confirmed simultaneously with the first personally identifiable information. In the aspect illustrated in Fig. 3, the first personally identifiable information is displayed in a first screen area 1210 which is a lower side of a screen, and the second personally identifiable information is displayed in a second screen area 1220 which is an upper side of the screen. Note that the present invention is not limited to such an aspect, and the second personally identifiable information may be displayed by performing a predetermined operation such as swiping on the operation display unit 120 displaying the first personally identifiable information. Conversely, the first personally identifiable information may be displayed by performing a predetermined operation such as swiping on the operation display unit 120 displaying the second personally identifiable information.

The operation display unit 120 can display whether the providing destination is in a state where the second personally identifiable information can be browsed, and can display whether the second personally identifiable information is on the person's side (providing source) or on the providing destination. When such an aspect is adopted, it is possible to confirm whether the second personally identifiable information is in a state of being not browsable by persons other than the person himself/herself, whether the second personally identifiable information is in a state of being browsable by a providing destination (transmission destination/sharing destination) other than the person himself/herself, or the like. In the aspect using the blockchain, in a case where the second personally identifiable information encrypted by using the public key of the providing destination is written in the blockchain or an encryption key is written in the blockchain by using the public key of the providing destination, the second personally identifiable information is present in the providing destination.

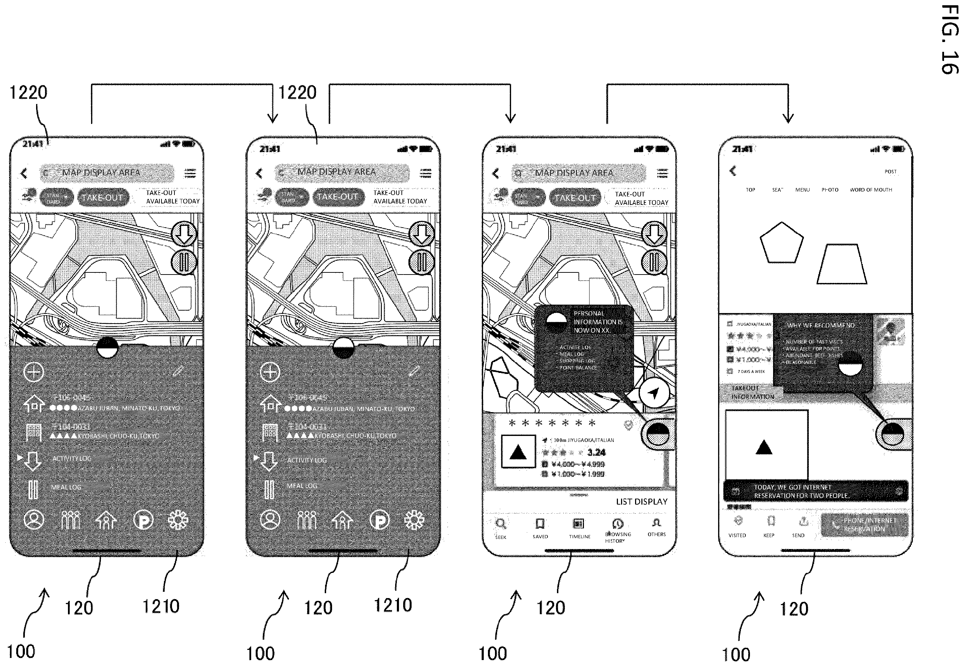

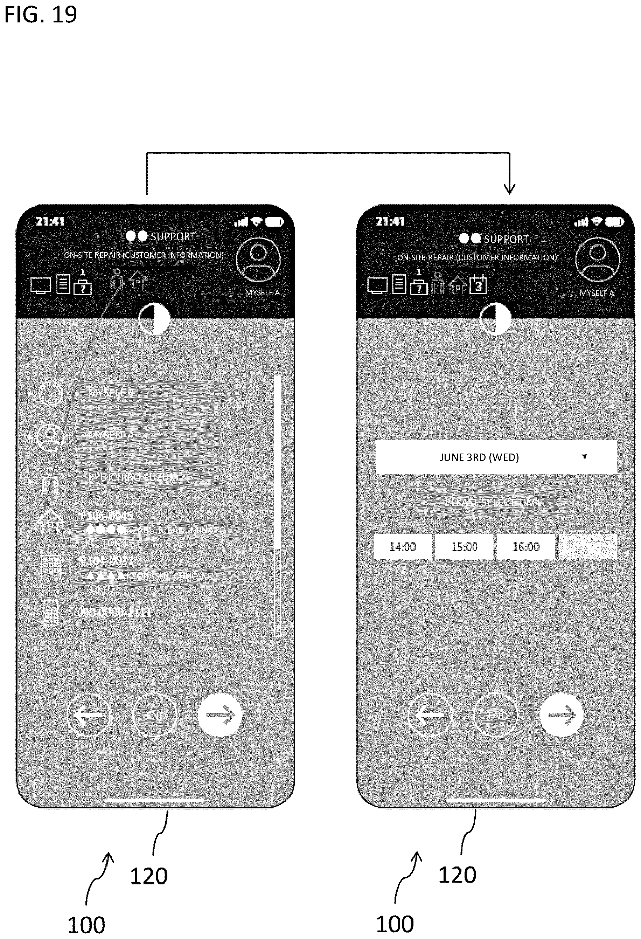

In the aspect illustrated in Fig. 3, information 1250 indicating the status of the second personally identifiable information is displayed as an icon in the first screen area 1210 and the second screen area 1220. In the case of a key mark illustrated in Fig. 3, it is indicated that the second personally identifiable information cannot be browsed by persons other than the person himself/herself (Note that, as described above, the first personally identifiable information is in an aspect that cannot be browsed by anyone other than the person himself/herself.). In the present embodiment, a description will be given using a circular icon called a split icon in which a semicircular filled part exists. When the semicircular filled part faces upward (toward the second screen area 1220) (see the leftmost screen in Fig. 16), it indicates that the information is shared. When the semicircular filled part faces downward (toward the first screen area 1210) (see the second screen from the left in Fig. 16), it indicates that the information is not shared. A state in which a filled part of the semicircular shape is located in the right half or the left half may indicate a state in which the second personally identifiable information is edited (see Fig. 19).

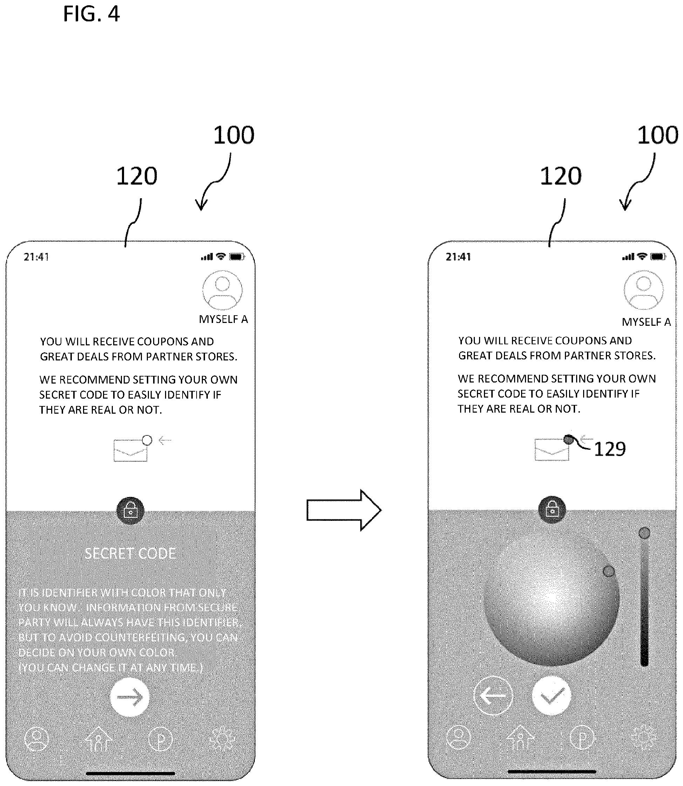

When receiving information from a third party, the operation display unit 120 may display whether the information is reliable information. As an example, it is possible to input reliability specifying information (secret code) 129 for indicating whether information transmitted from a third party by the operation display unit 120 or the operation unit 121 is transmission of information using the second personally identifiable information of the third party, and when the second personally identifiable information is received from a reliable third party, the reliability specifying information 129 may be displayed on the operation display unit 120 (see Fig. 4). When such an aspect is adopted, it is possible to prevent reliable information from being forged due to impersonation or the like. Furthermore, an electronic signature using a blockchain may be performed, and the providing destination may transmit information. In this case, whether the providing destination is accurate can be confirmed by the electronic signature.

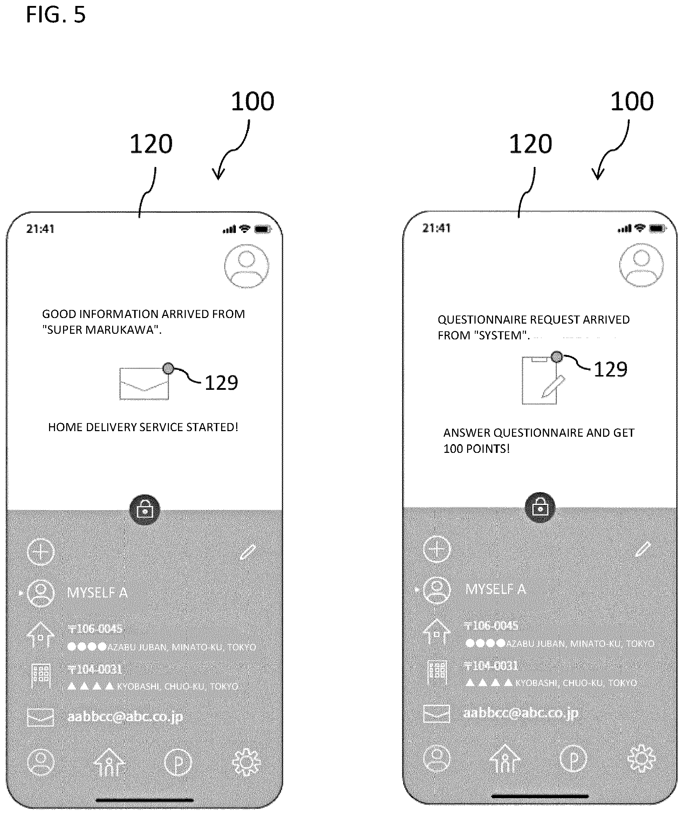

As an example, a color registered in advance by the person himself/herself may be displayed on a part of the operation display unit 120 or the background. Since a person other than the person himself/herself cannot basically know the color registered in advance by the person himself/herself, even if information is sent in a false image, the color is basically not displayed on the operation display unit 120 that has received the information. Therefore, even in a case where information is sent by falsifying an image, it is possible to recognize it immediately. Therefore, in a case where information is sent by falsifying an image, it is possible to confirm at a glance that the information is unreliable information. Fig. 4 is a diagram illustrating an example of a screen displayed on the operation display unit 120 of the terminal device 100 when a color is registered in advance. The left side of Fig. 5 illustrates that it is possible to confirm that the information "Home delivery service started!" from "Super Marukawa" is reliable by displaying the reliability specifying information 129 on the operation display unit 120, and the right side of Fig. 5 illustrates that it is possible to confirm that the information "Answer the questionnaire and get 100 points!" from "System" is reliable by displaying the reliability specifying information 129 on the operation display unit 120. Note that, as the reliability specifying information 129, various types such as shapes and words can be used in addition to colors.

In response to the input from the terminal device 100, control may be performed so that the second personally identifiable information cannot be browsed by the terminal device 100 of the providing destination. In the case of using the blockchain, the recording unit 160 may write to the blockchain so that the second personally identifiable information cannot be browsed by the terminal device 100 of the providing destination. Furthermore, in a case where the second personally identifiable information is stored in the device storage unit 280 of the information processing apparatus 200, the second personally identifiable information stored in the device storage unit 280 may not be browsed in response to an input from the terminal device 100. According to these aspects, it is possible to control the viewing of the second identification information provided at least once afterwards. The second screen from the left in Fig. 16 illustrates a state in which the split icon is filled with the lower half, and illustrates an aspect in which the second personally identifiable information once provided on the leftmost screen in Fig. 16 is collected.

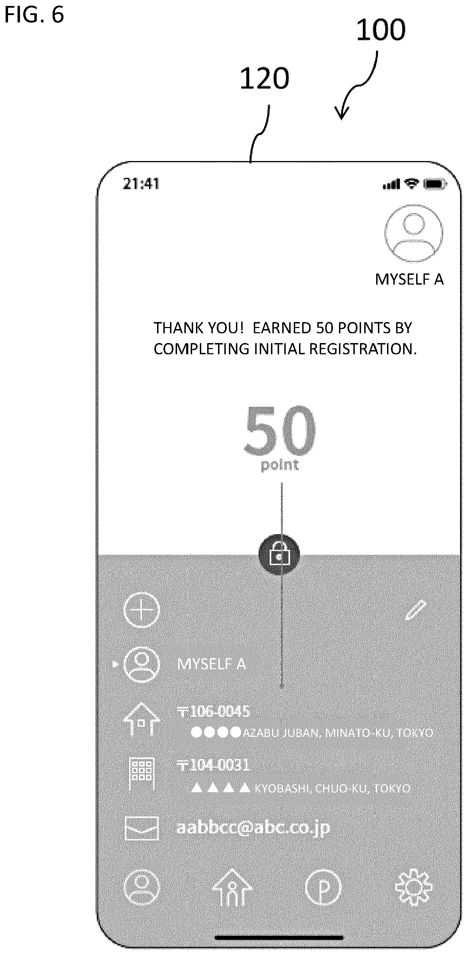

When shared information including position information, experience information, and the like is provided from the terminal device 100 of the providing source to the terminal device 100 of the providing destination in addition to the second personally identifiable information, points or currency including virtual currency may be granted from the providing destination to the providing source. In this case, the virtual currency may be provided from the terminal device 100 of the providing destination that has received the shared information to the terminal device 100 of the providing source using the blockchain. This processing may be performed by an input from the terminal device 100 of the providing destination that has received the shared information. Furthermore, when the device reception unit 290 of the information processing apparatus 200 receives the shared information, the device control unit 210 may grant points or currency such as virtual currency to a sender who has transmitted the shared information. In a case where such an aspect is adopted, the providing source is motivated to actively disclose his/her own information. Furthermore, according to the present embodiment, the personal information itself is not disclosed, but the information at the degree of specificity designated by the providing source, which is the second personally identifiable information, can be browsed. Therefore, the providing source can also disclose his/her own information with confidence. Fig. 6 illustrates an example of a screen displayed on the operation display unit 120 of the terminal device 100 of a sender when points are granted to the sender who has transmitted the shared information. In a case where the virtual currency is provided using the blockchain, a blockchain for the virtual currency may be prepared as a sidechain. The regional currency may be granted as the virtual currency. In this case, the circulation of the virtual currency in the region can be activated, and it can also be useful for regional revitalization. Note that, in the present embodiment, "points or currency" includes electronic money (including prepaid payment instruments), virtual currency (including a cryptographic asset), and points, and means one or more of electronic money, virtual currency, and points.

In a case where a target application is introduced and a new person installs the target application, points or currency may be granted from the administrator of the system to the introducer of the target application. Furthermore, even in a case where the new person further introduces the target application and another new person installs the target application (even in a case where the new person has a grandchild), points or currency may be further granted from the administrator of the system to the first introducer of the target application.

Processing including a log using the target application may be written to the blockchain. In a case where the blockchain is used in this manner, it is possible to manage processing using the target application at low cost and in a highly reliable state.

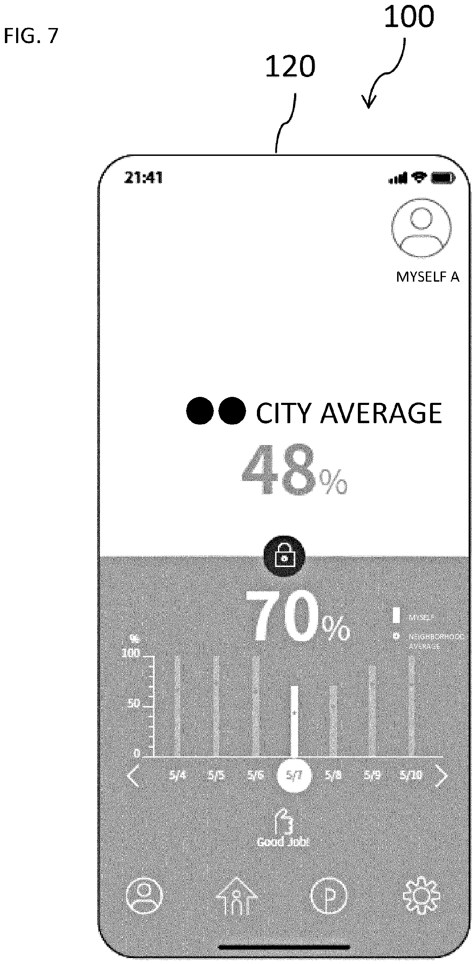

An aspect in which points or currency such as points is granted to a providing source by providing position information as the shared information may be used. In this case, the points or currency may be granted based on self-restraint such as not going out from home or not moving across prefectures. In this case, the center of the coordinate axes may be the home. In Fig. 7, an average of waiting times at home in a region (•• city) where the user's residence is located is also illustrated, and points may be granted when user's average exceeds the average, or points may be granted when the average exceeds a predetermined threshold. The points may be granted by granting points or currency such as virtual currency by a local government or a country using a blockchain. Furthermore, a stay history in a predetermined area such as a downtown may be obtained. In this case, information such as how long the user spends in a downtown can be obtained. These pieces of information may be provided to an administration such as a local government or a country, and points and currency such as virtual currency may be granted from the administration. Since such information is permitted and provided by the providing source, it can be utilized for various analyses. Furthermore, information for prompting a provider to wait at home may be transmitted by recommending a distribution service of a moving image or the like to a provider who frequently goes out to a downtown.

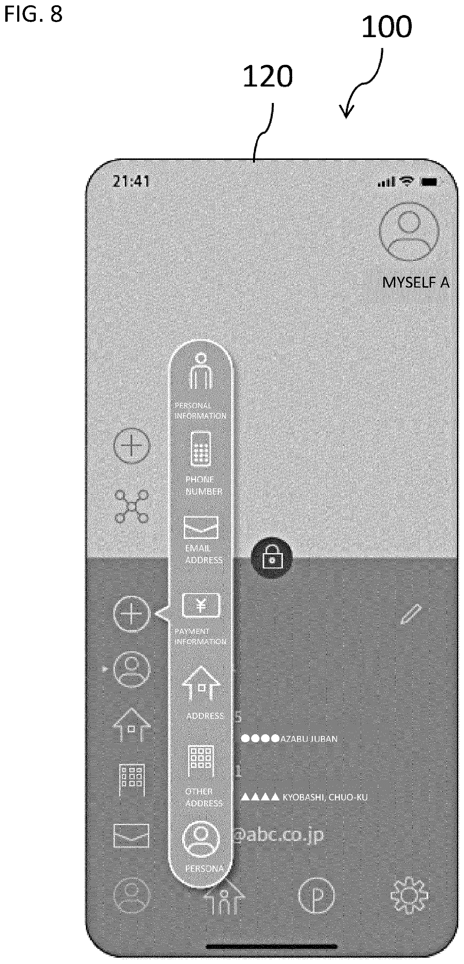

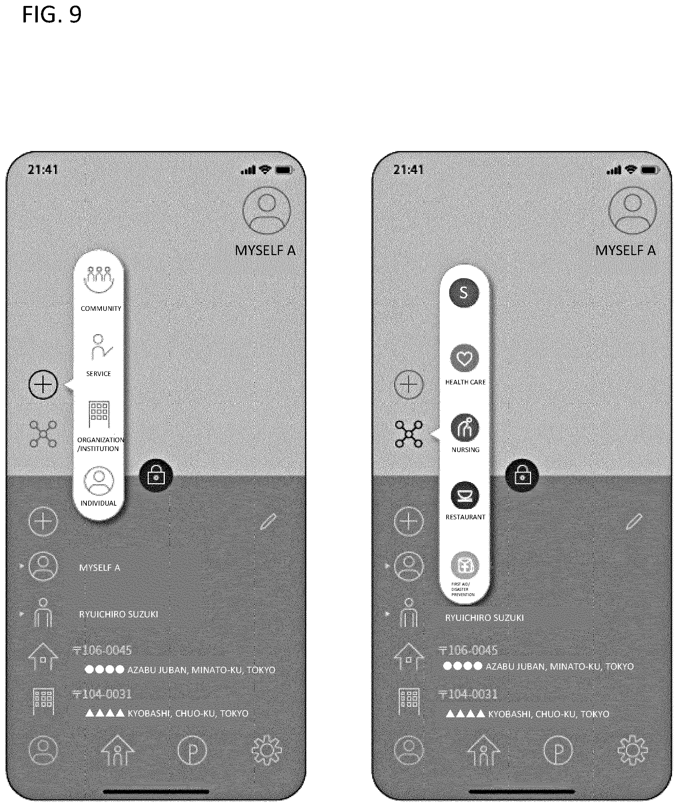

Fig. 8 illustrates a screen when information such as personal information, telephone information, and payment information is displayed on the operation display unit 120. By operating such a screen, various types of information may be confirmed and edited. Fig. 9 illustrates a screen for displaying information when various services are provided on the operation display unit 120. An intended service may be received by operating such a screen. For example, it is conceivable to use a nursing care service or a shopping request service. In this case, for example, when an elderly person requests a nursing care service or a shopping request service using a target application, a helper such as a young person is assigned via the target application. Since the helper uses the target application using the second personally identifiable information, the helper can be trusted to some extent. Therefore, the service user can request the service with confidence. The helper may be a volunteer, but points or currency such as virtual currency may be provided to the helper from a user of the service or a local government. In a case where the local government grants points or currency such as virtual currency, it may be regional currency.

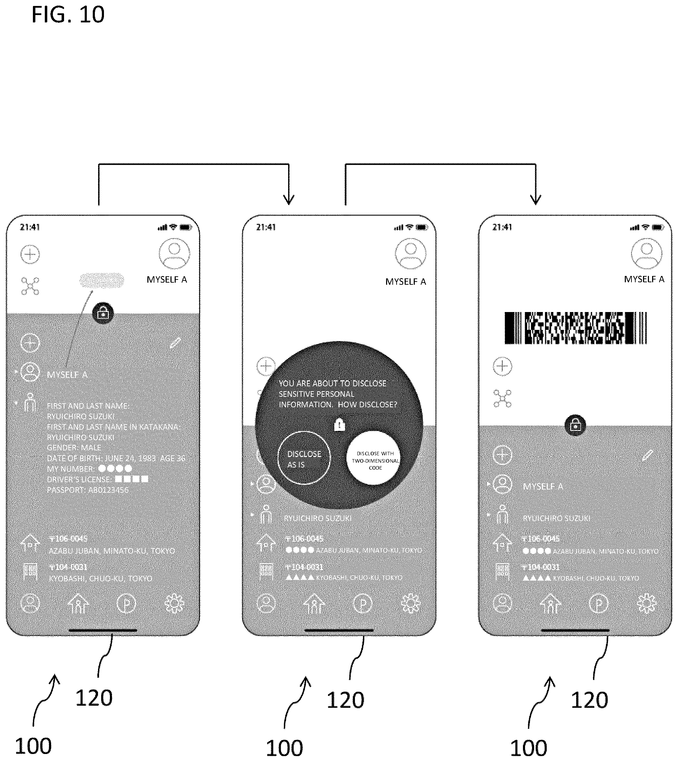

The value of the points or currency granted in a case where the specificity of the second personally identifiable information is high may be higher than the value of the points or currency granted in a case where the specificity is low. As an example, the value of the points or currency granted in a case where the low-level specifying information is provided may be smaller than the value of the points or currency granted in a case where the medium-level specifying information or the high-level specifying information is provided. Since the economic value of information increases as the specificity (granularity) increases, it is possible to give points or currency reflecting the economic value of information to a provider of the information. Note that the medium-level specifying information is higher in the level of the specificity of the personal information than the low-level specifying information, and the high-level specifying information is higher than the medium-level specifying information. In a case where information with high specificity is to be shared, the device control unit 210 may check a disclosure aspect (sharing aspect) (For example, as illustrated in Fig. 10, a term such as "You are about to disclose sensitive personal information." may be displayed on the operation display unit 120 to call attention.). As a disclosure aspect, information as it is may be disclosed, or may be disclosed by encryption information such as a two-dimensional barcode or a barcode. Fig. 10 illustrates a screen for selecting whether to disclose with a two-dimensional code or to disclose as it is when trying to share a Social Security and Tax Number.

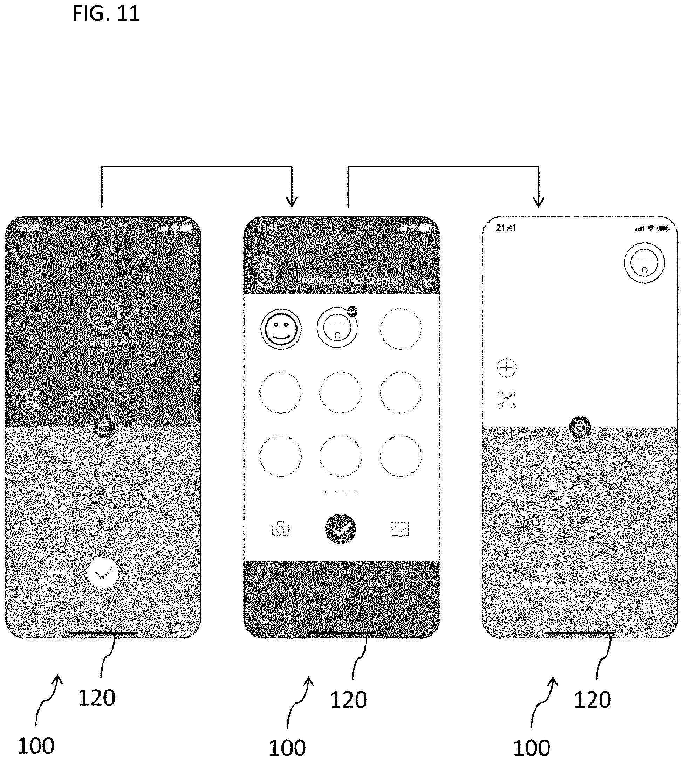

The device storage unit 280 may store a plurality of pieces of avatar information (In Fig. 8, it is indicated as "persona".) associated with the first personally identifiable information and a plurality of pieces of second personally identifiable information having different specificities associated with the first personally identifiable information. Furthermore, the avatar information and the second personally identifiable information having different specificities may be stored in the device storage unit 280 in association with each other. Fig. 11 illustrates screen transition when selecting avatar information.

In a case where an operator performs an operation on an operator terminal using certain avatar information, the second personally identifiable information associated with the certain avatar information can be browsed on another device terminal using specific application. In a case where such an aspect is adopted, accuracy of specificity of information disclosed (shared) by the user can be easily selected by appropriately selecting the avatar information. In the middle screen of Fig. 11, the user's own avatar information is selected, and when the avatar information is selected, exchange using the target application can be performed using the information associated with the avatar information. By adopting such an aspect, it is possible to interact with a third party with an avatar (face) corresponding to a scene. Note that, even in a case where the avatar is used in various aspects, since the avatar is associated with the terminal device 100 in the end by being associated with other second personally identifiable information, it is difficult to take a malicious action due to impersonation. In particular, in a case where information that can identify an individual, such as a driver's license number or a passport number, is provided in any of the second personally identifiable information, association with the individual is also possible, and thus it is more difficult to take malicious action by impersonation. Furthermore, in a case where the blockchain is adopted, a series of exchanges or the like using the target application is recorded in the blockchain, and thus it is advantageous in that falsification cannot be performed.

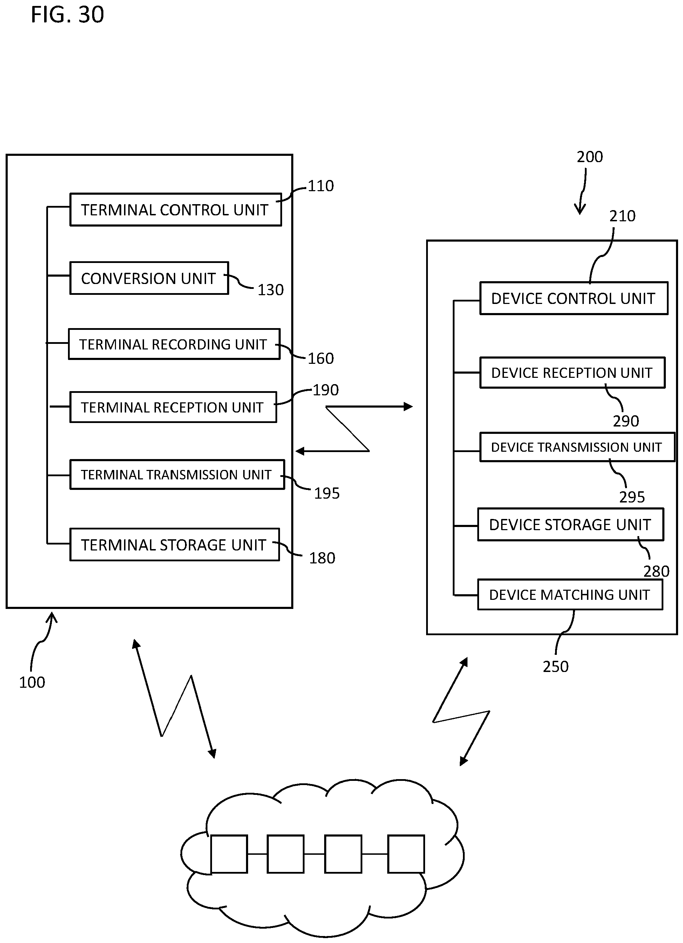

The terminal device 100 may be able to transmit a ride-sharing request using the target application. In this case, after the avatar information is selected and the disclosed information is selected, the ride-sharing request may be written in the SNS or transmitted to the information processing apparatus 200. The terminal device 100 may have a first matching unit 150 that performs matching on the basis of the second personally identifiable information in a case where the ride-sharing request is transmitted (see Fig. 2). The second personally identifiable information may include specific information such as a hobby, a team who is a fan, and a player who is a fan. In this case, the first matching unit 150 may perform matching using these pieces of information. In a case where the ride-sharing request is written in the SNS, the first matching unit 150 may select a person who performs the shared ride with reference to specific information such as a team who is a fan and a player who is a fan. The first matching unit 150 may read the second personally identifiable information of another user stored in the device storage unit 280 or stored in the blockchain, and perform matching. Furthermore, a device matching unit 250 may perform matching using the second personally identifiable information of a plurality of users stored in the device storage unit 280 or stored in a blockchain (see Fig. 30). In this case, the matching result is indicated for each matched user, but the matching may be established only in a case where all the matched users have approved.

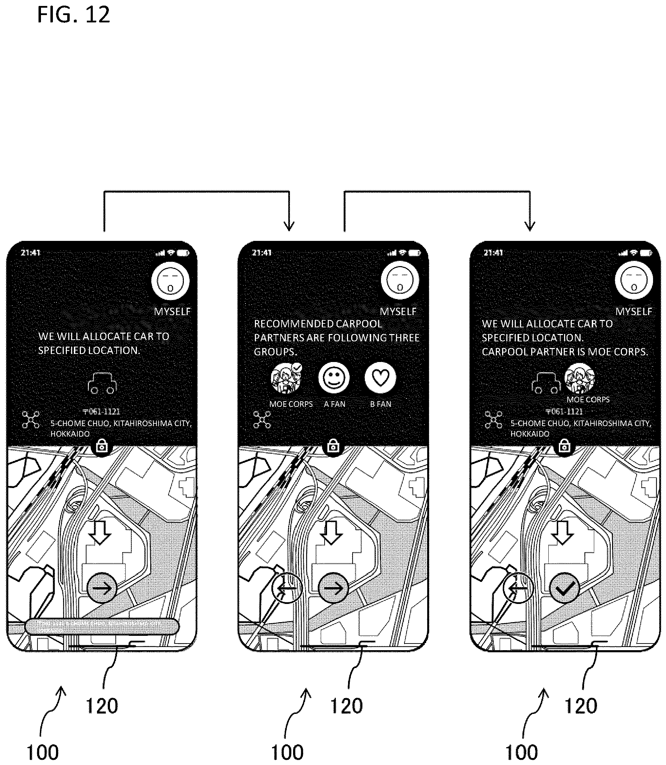

Fig. 12 illustrates screen transition when the terminal device 100 transmits a ride-sharing request using the target application. In an aspect illustrated in Fig. 12, when the ride-sharing request is transmitted to the information processing apparatus 200, the device matching unit 250 performs matching on the basis of specific information, and displays other matched persons who desire the shared ride. In a case where the content is accepted, matching is completed on the basis of the information by inputting the acceptance from the operation display unit 120. In a case where the content is not accepted, matching by the device matching unit 250 is performed again by inputting that the change is desired from the operation display unit 120. This processing may be repeated until the final fellow passenger is determined. Note that such approval is not required, and an aspect may be adopted in which the user gets on a designated vehicle on the basis of a result of matching performed by the device matching unit 250. The designated vehicle may be, for example, a shuttle bus heading from a station to a stadium, a small vehicle (may be a self-driving vehicle), a taxi, or the like. In a case where such an aspect is adopted, use such as going to a destination such as a stadium while enjoying a conversation with a fellow passenger who has the same hobby or the like can also be expected.

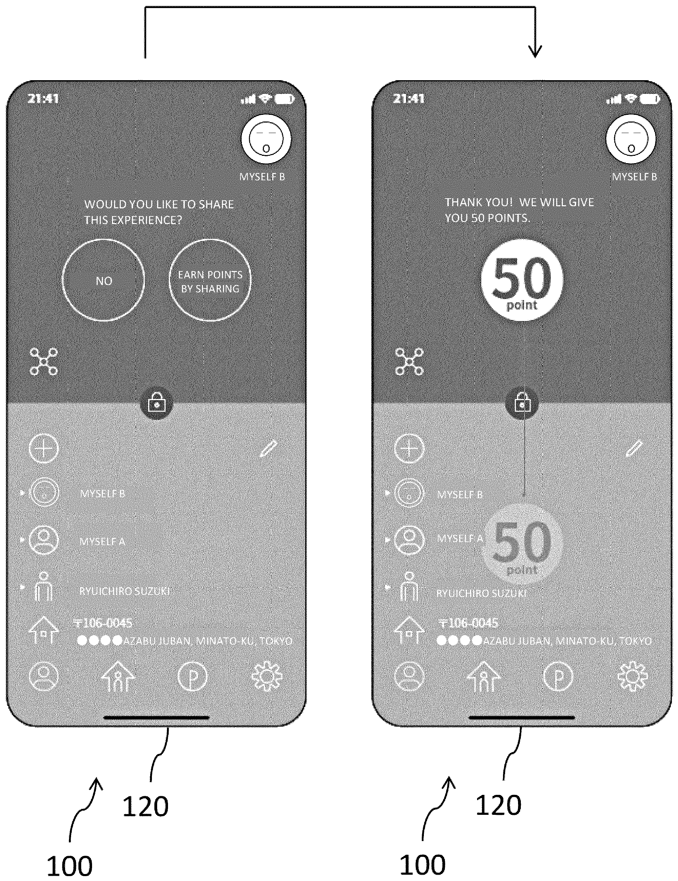

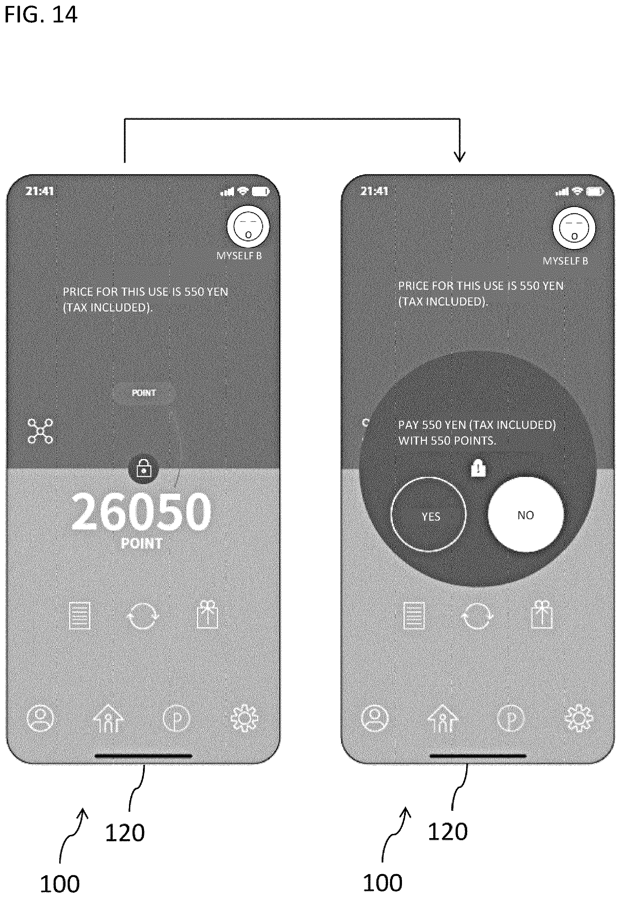

As described above, the experience information may be shared as the shared information, and for example, a result of the shared ride using the target application may be provided to a predetermined bulletin board or SNS as the experience information. By providing such information, points or currency such as virtual currency may be granted to the provider. Fig. 13 illustrates screen transition on the operation display unit 120 when the experience is shared, and illustrates screen transition in a case where points are granted by sharing the experience. Furthermore, the use fare of the vehicle may be paid in points or currency such as virtual currency. In a case where the shared ride is performed using a taxi as a vehicle, the fare divided automatically may be charged to the persons who have performed the shared ride. Furthermore, when a shuttle bus or a small vehicle is used, a fare for use may be paid in points or currency such as virtual currency. Fig. 14 is a diagram illustrating screen transition when points are used as the points or currency.

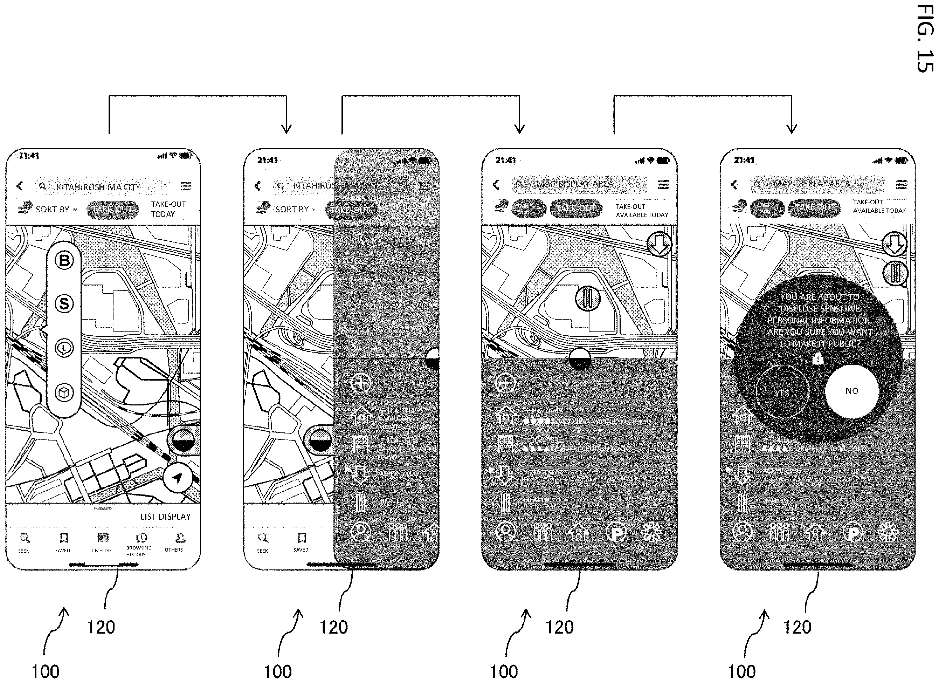

The experience information as the shared information may include evaluation of a restaurant and the like. Fig. 15 is a diagram illustrating an example of screen transition at that time. A screen of the target application is superimposed on a map display screen. By superimposing the screens in this manner, the target application is driven. In an aspect illustrated in Fig. 15, an aspect is illustrated in which information indicating that the user has had a meal at the place is provided by dragging and dropping and superimposing "meal log" on the map display screen. Furthermore, location information of the terminal device 100 by GPS or the like, contents of a meal obtained by analyzing an image captured by the terminal device 100, and information of a store where the user stayed may be automatically recorded in the terminal device 100. Then, these pieces of information may be provided by dragging and dropping the "meal log". Also for these, writing to the blockchain by the recording unit 160 may be performed. Furthermore, when the information indicating that the user has had a meal at the place is provided in this manner, it may be possible to write the evaluation at the restaurant. By using such an aspect, it is possible to indicate the evaluation of the restaurant using the second specific personal information rather than the complete anonymity, and it is possible to enhance the credibility of the evaluation. As the shared information, frequency information may be shared depending on how many times a person who has described the meal log has visited the store in the past and how often the person visits the store. In this case, it is possible to grasp whether the evaluation is made by a person who has visited only once, or the description is made by a person who has visited several times in the past or a regular customer, and it is possible to enhance the credibility of the information. The meal log may include not only a meal at a restaurant but also a meal at home. When the "meal log" is dragged and dropped, not only the information recorded in the terminal device 100 as the meal log but also information associated with the meal log, for example, the place where the user was last, the exercise history, and the like may be provided to the providing destination. These pieces of information may be acquired by the position information of the terminal device 100 or may be acquired by using a dedicated application associated with the target application.

From the identification information of the terminal device 100, the position information of the terminal device 100, and the stay time thereof, the device control unit 210 may determine that the owner of the terminal device 100 has visited the store, and store the information in the device storage unit 280 in association with the second specific personal information. Alternatively, when entering the store, the operator may press a predetermined button such as check-in displayed on the operation display unit 120 of the terminal device 100, and the entry into the store may be stored in the device storage unit 280 in association with the second specific personal information.

When the information is sent, the split icon is inverted, which indicates that the shared information is on a side of the transmission destination. The information shared in this manner may be collectable as described above. After the information is collected, the providing destination cannot view the information thereafter. The collection here is typically to prohibit the providing destination from accessing the shared information recorded in the information processing apparatus 200 (including a distributed server). In a case where the blockchain is used, providing destinations of the information on the blockchain may be followed, and access to the shared information may be prohibited from all the providing destinations. In a case where the shared information is transmitted to the providing destination, and a command to collect the shared information is input from the terminal device 100, it is conceivable to record, in the blockchain, that the providing destination has issued a command to delete the shared information recorded in the providing destination.

The provided information may be appropriately confirmed by the terminal device 100. For example, as illustrated in the second row from the right in Fig. 16, a list of shared information may be confirmed or details thereof may be confirmed by long-pressing a predetermined icon (split icon) or the like. An aspect illustrated in Fig. 16 shows that an activity log, a meal log, a shopping log, and a point balance are shared as shared information. Furthermore, a relationship between the store and the operator (the number of store visits in the past or the like) may be confirmed, or the reason why the store is recommended may be confirmed.

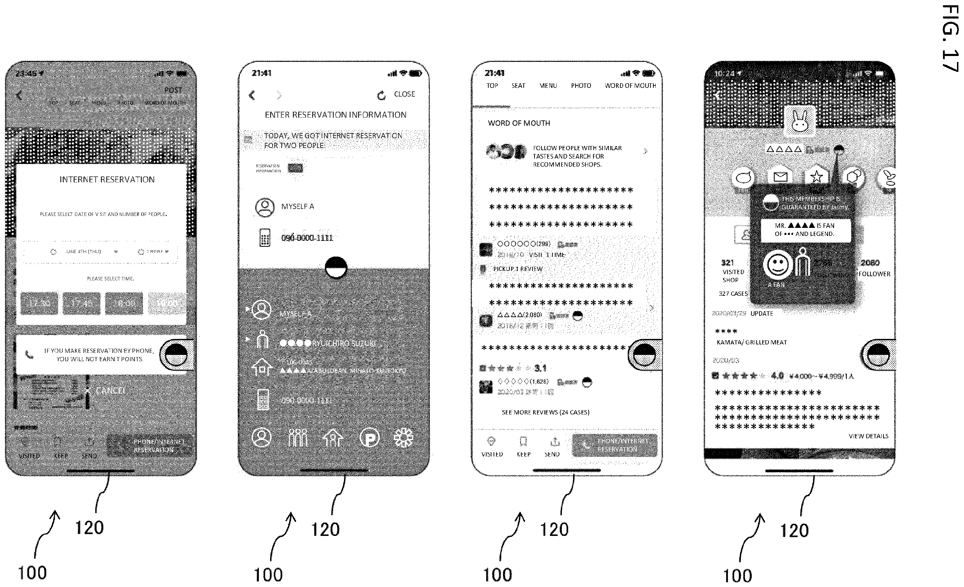

The reservation may be made using the target application, and at that time, the first personally identifiable information or each of the first personal identification elements may be dragged and dropped to obtain the shared information (see Fig. 17). Since the second personally identifiable information is reliable information to some extent, it may be made possible to make the reservation with a handle name. When the evaluation information of the store is browsed, a predetermined icon (split icon) may be displayed for writing using the target application. By adopting such an aspect, the user (third party) who uses the meal log can confirm at a glance that the writing is performed using the second personally identifiable information and the information has high credibility. By tapping a predetermined icon (split icon), more detailed information on the second personally identifiable information may be viewed. In a case where such an aspect is adopted, it is possible to confirm a relationship with the user, such as a common hobby that is not normally seen or whether the user is a person who has performed a shared ride before. As an example, in a case where the information on the shared ride is shared, and a person is the person who got on the vehicle together at the time of the shared ride, the terminal device 100 may display that the person has performed the shared ride. By adopting such an aspect, it is possible to grasp a relationship between the poster and the self.

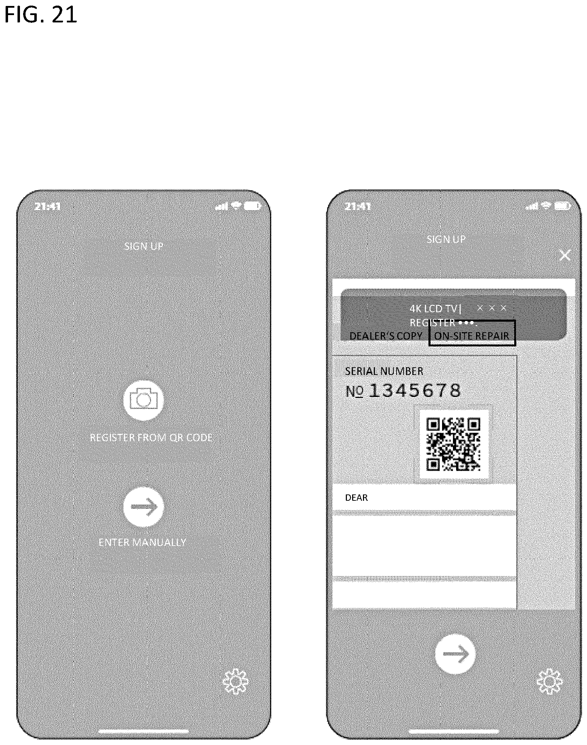

The first personally identifiable information includes information on an owned device owned by a provider, and the information on the owned device may be provided to another terminal device 100 without being converted into the second personal identification element. Examples of the owned device include electrical appliances. The registration of the owned device may be performed by manual input, information of the device purchased when the product is purchased via the target application (for example, when the product is purchased through e-commerce) may be recorded in the terminal device 100, or predetermined information such as a QR code of the product may be read by the terminal device 100 (see Fig. 21). At this time, the purchase date and the purchase shop may also be input.

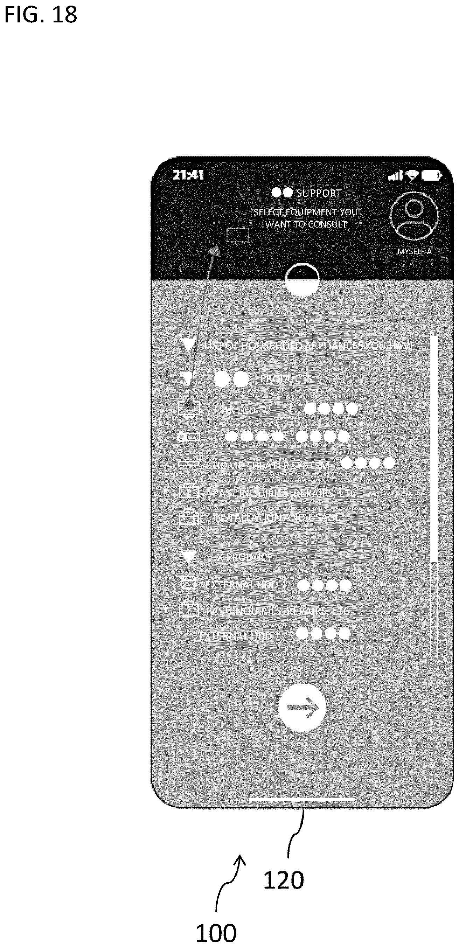

For example, when exchange with a center that provides after-sales service for home electric appliances is performed in a chat form via SNS, a target application may be started, and predetermined information regarding an owned device may be dragged and dropped to provide the information to the center (see Fig. 18). Such information may be provided via a blockchain. As illustrated in Fig. 15, the target application may be brought into an available state by laterally sliding and aligning the screen of the target application with the screen on which the exchange is performed in a chat form. In a case where the aspect of sharing information using the target application is adopted in this manner, accurate information can be easily provided to the center by a method. For example, by sharing the information on the target home electric appliances from a list, a model name and a serial number can be provided to the center as supplementary information. Note that, regardless of the manufacturer, owned devices such as home electric appliances may be collectively registered. Furthermore, since minimum information is obtained as personal information as the center, the management load can be reduced.

Also when repair of an owned device such as a home appliance is requested, address information which is one of the first personal identification elements may be shared by dragging and dropping (see Fig. 19). In this aspect, it is advantageous in that it is possible to provide highly specific information such as actual address information to the providing destination only when necessary. Furthermore, the reservation date and time may be selected as it is.

The terminal device 100 may store information regarding exchange via the SNS. The exchange may be stored in both the terminal device 100 of a person who has contacted the center performing the after-sales service and the terminal device 100 in the center. Furthermore, such exchange may be recorded in the blockchain by the recording unit 160. In a case where such an aspect is adopted, it is possible to browse the history by reading information regarding the exchange between the two at a later date. Furthermore, the exchange history may be confirmed by long-pressing the split icon or the like. The recording of such exchange information may be performed automatically or may be started and/or stopped by a predetermined operation. At this time, the recording may be displayed as an icon (for example, "REC icon"). In a case where the exchange with the center is recorded in the terminal device 100, it is advantageous in that a result of the exchange can be passed to another company. Specifically, when inquiring the center of S company about the malfunction of a device, the malfunction of the device may be caused by another device of R company. In this case, by transmitting the recorded communication with the center of S company to the center of R company, it is possible for R company to easily grasp the background, and it is advantageous in that the person who made an inquiry (user) does not need to perform the explanation again. Furthermore, even in a case where the inquiry is made again after a lapse of time, providing information recorded as information at the time of the previous inquiry from the user to the center is beneficial in that the user does not need to perform the explanation again. Furthermore, the information recorded in this manner is also recorded in the terminal device 100 of the center, and may be transmitted from the center of S company to the center of R company upon receiving permission of the person who made the inquiry (user). The contents of the exchange may be confirmed by long-pressing a predetermined icon or the like.

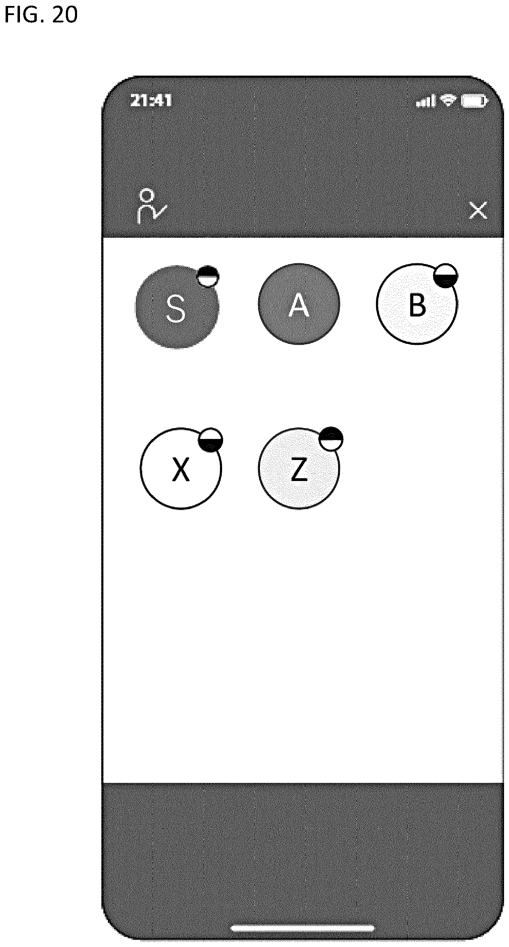

As illustrated in Fig. 20, a predetermined icon such as a split icon may be displayed in the icon of the application corresponding to the target application among the applications installed in the terminal device 100. It may be possible to confirm what kind of information is shared by long pressing of an icon or the like. A predetermined icon such as a split icon may be displayed only for an application corresponding to the target application. In the case of using the split icon, when the filled semicircular shape faces upward, it indicates that a part or all of the second personally identifiable information is provided, and when the filled semicircular shape faces downward, it indicates that the second personally identifiable information is not shared.

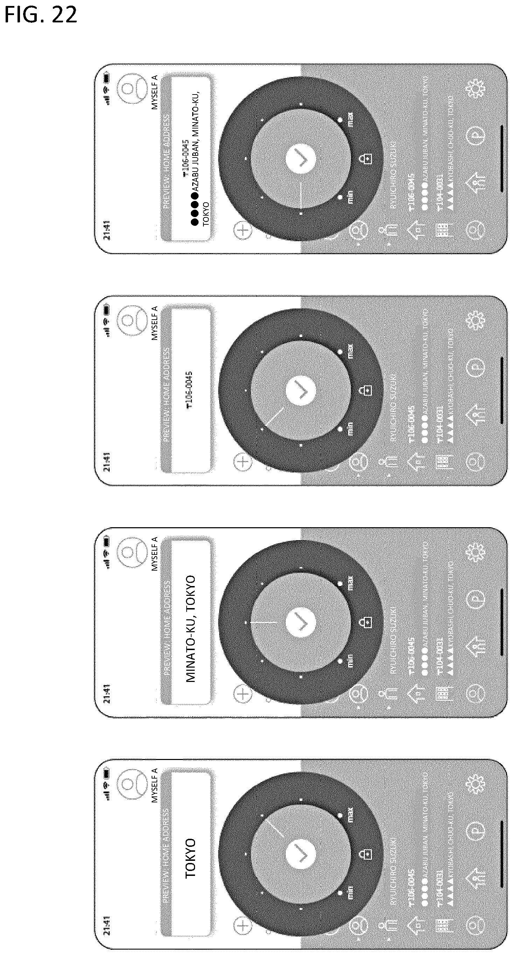

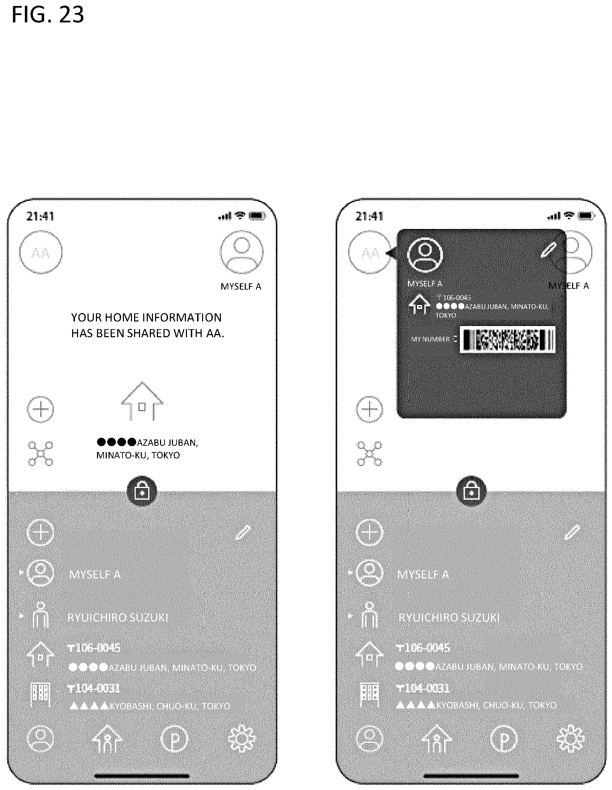

A degree of specificity of the first personally identifiable information may be easily adjusted. For example, by dragging and dropping the first personally identifiable information displayed in the first screen area 1210 to the second screen area 1220, the degree of specificity of the first personally identifiable information may be adjusted. In this case, a control screen for selecting a disclosure method may be displayed by dragging and dropping the first personally identifiable information to the second screen area 1220, and the level of specificity may be adjusted by operating the control screen. As an example, a security controller as supported in Fig. 22 is displayed, and approaching "max" decreases the specificity, and conversely approaching "min" increases the specificity. The specificity at this time may be abstracted according to a predetermined standard, the specificity may be stored in the information processing apparatus 200, and a degree of abstraction may be determined by reading the specificity. In Fig. 22, a preview is displayed, and with what specificity information is provided is displayed. When the information is provided in this way, what kind of information (second personally identifiable information) is provided in the providing destination may be confirmed, or the content of the provided information may be confirmed by long pressing of an icon indicating the providing destination as illustrated in Fig. 23.

In the above description, the first personally identifiable information and the second personally identifiable information are used. However, an aspect in which first personal information including information that does not identify an individual is used instead of the first personally identifiable information may be adopted, or an aspect in which second personal information including information that does not identify an individual is used instead of the second personally identifiable information may be adopted.

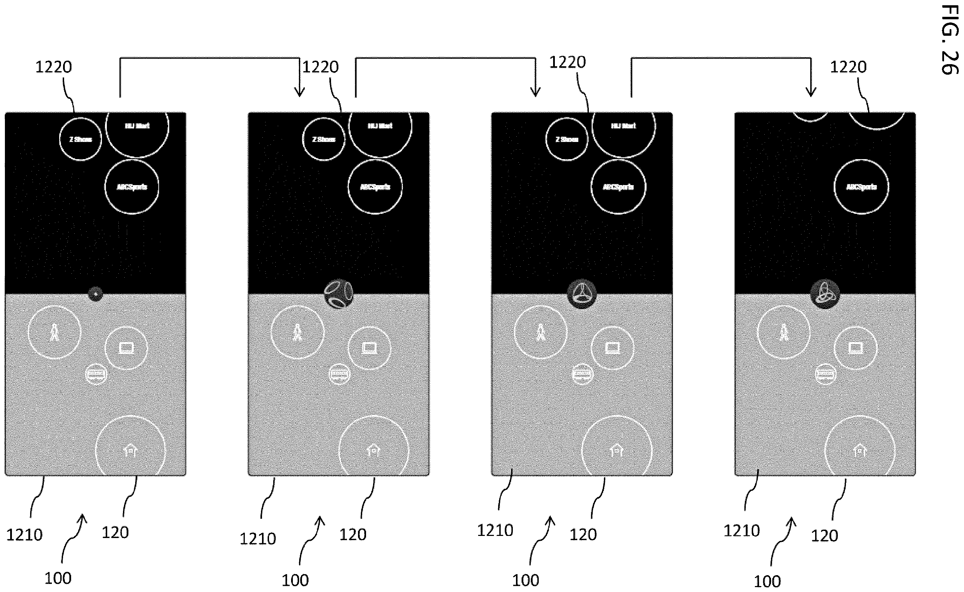

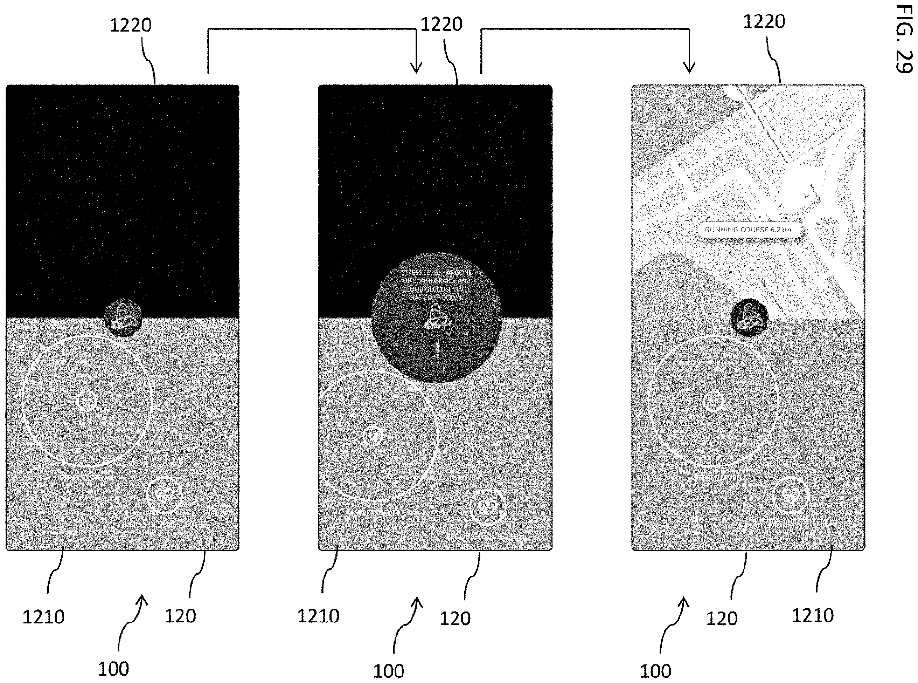

The first personal information may include the plurality of first personal information elements, and may also include, as the first personal information elements, information such as the number of steps in one day or a predetermined time, a train getting-on section or a getting-on frequency, a personal computer use time or a use frequency, and a smartphone use time or a use frequency. The second personal information may also include the plurality of second personal information elements. In aspects illustrated in Figs. 26 to 28 to be described later, the number of steps (see a picture of a shape of a person), a train getting-on section and a train getting-on frequency (see a picture of a train), a use time of a personal computer (see a picture of a personal computer), and a time at home (a picture of a house) are illustrated as the first personal information elements in the first screen area 1210. Furthermore, an aspect illustrated in Fig. 29 shows an aspect in which a place, distance, and time of running are stored in the terminal device 100 as the first personal information elements.

### Second Embodiment

Next, a second embodiment will be described.

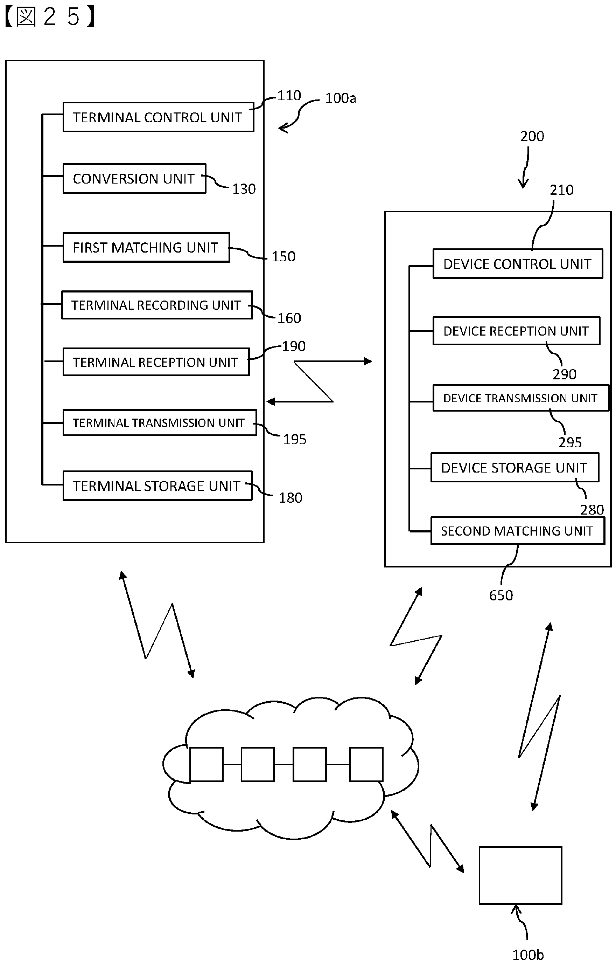

In the present embodiment, a part or all of the first personal information stored in a terminal storage unit 160 of a first terminal device 100a is stored in an information processing apparatus 200 or recorded in the blockchain, and the information processing apparatus 200 receives request information from a second terminal device 100b (see Fig. 25). Furthermore, in the present embodiment, a second matching unit 650 performs matching on the basis of the request information and the first personal information stored in the information processing apparatus 200. The first personal information may be stored in the information processing apparatus 200 or recorded in the blockchain with permission from the user. The other configurations are similar to those of the first embodiment, and any aspect described in the first embodiment can be adopted. The members described in the first embodiment will be described using the same signs. Note that the function as the second matching unit 650 may be performed by the device matching unit 250 described above, or the second matching unit 650 may be provided separately from the device matching unit 250.

Furthermore, the first personal information stored in the information processing apparatus 200 or recorded in the blockchain may not include information with high specificity (a Social Security and Tax Number, a driver's license number, a passport number, a credit card number, a face photograph, biological information such as a fingerprint, iris information, and vein information.) as personal information. Furthermore, the first personally identifiable information that is not provided to the information processing apparatus 200 may be designated by the user. Furthermore, the second matching unit 650 may perform matching using only the second personally identifiable information in the first embodiment without using the first personal information (see a third embodiment to be described later).

As an example, the first terminal device 100a and the second terminal device 100b of the present embodiment are the terminal devices in the first embodiment, the first terminal device 100a is typically a terminal managed by an individual user, and the second terminal device 100b is typically a terminal managed by an external user other than the individual user, such as a company, a country, or a local public organization. In the present embodiment, a part or all of the first personal information is stored in the device storage unit 280 of the information processing apparatus 200 or is recorded in a blockchain.

Request information that is information desired by an external user may be input from the second terminal device 100b. When the request information is input in this manner, the first personal information stored in the device storage unit 280 of the information processing apparatus 200 or recorded in the blockchain may be read by the second matching unit 650, and matching may be performed by the second matching unit 650.

The second matching unit 650 may perform matching between the request information and the first personal information by applying a matching model prepared in advance and stored in the device storage unit 280. The matching model may be a pre-generated model. Furthermore, the second matching unit 650 has an artificial intelligence function, and may generate a matching model by machine learning. In this case, the second matching unit 650 may generate the matching model by learning an appropriate matching result using the request information for learning and the first personal information for learning as input information. As the request information for learning and the first personal information for learning, results actually used in the past may be used, or information prepared in advance as a model case may be used. Furthermore, when the first personal information satisfies a requirement specified by the request information, the second matching unit 650 may determine that matching has been performed.

When the second matching unit 650 determines that certain request information matches certain first personal information as a result of applying the certain request information and the certain first personal information to the matching model, information (for example, an icon) indicating an external user such as a company that has provided the certain request information may be displayed on an operation display unit 120 of the first terminal device 100a used by an individual user as a matching candidate. Such control may be performed by the first terminal device 100a receiving information from the information processing apparatus 200. Whether or not certain request information matches certain first personal information may be determined by whether or not a matching degree is greater than or equal to a predetermined threshold. Note that, since the request information is output for each external user, a plurality of matching candidates can be naturally displayed on the first terminal device 100a. As an example, when information regarding a user who is walking "step °° or more per day" is desired as the request information is input from the second terminal device 100b, matching is performed with respect to a user who satisfies a requirement of "step °° or more per day", and an icon of the external user who has issued the request information may be displayed on the operation display unit 120 of the first terminal device 100a. In another example, when information of a user who tends to be in the vicinity of Shibuya between 13:00 and 15:00 is desired as the request information is input from the second terminal device 100b, matching is performed for an individual user satisfying the requirement "a user who tends to be in the vicinity of Shibuya between 13:00 and 15:00", and an icon of the external user who has issued the request information may be displayed on the operation display unit 120 of the first terminal device 100a. Note that a model may be employed in which the requirement "tends to be in the vicinity of Shibuya" has a higher value as a distance from the center such as Shibuya station is closer, and has a higher value as the stay time is longer. In this case, the second matching unit 650 may calculate an evaluation value by multiplying the reciprocal of the distance from the center by the stay time and then further multiplying the result by a coefficient, and determine whether the evaluation value is greater than or equal to a threshold. In a case where a predetermined model is adopted, such as a case where an artificial intelligence function is used, a model obtained by adding adoption variables multiplied by an adoption coefficient may be adopted.

As illustrated in Fig. 26, the first personal information may be displayed in a first screen area 1210 on a lower side of a screen, and matching candidates may be displayed in a second screen area 1220 on an upper side of the screen. In an aspect illustrated in Fig. 26, the matching candidate is illustrated in a balloon shape, and moves so as to float in the second screen area 1220. First personal information elements are illustrated in the first screen area 1210. The first personal information elements in the first screen area 1210 may also move so as to float in the first screen area 1210.

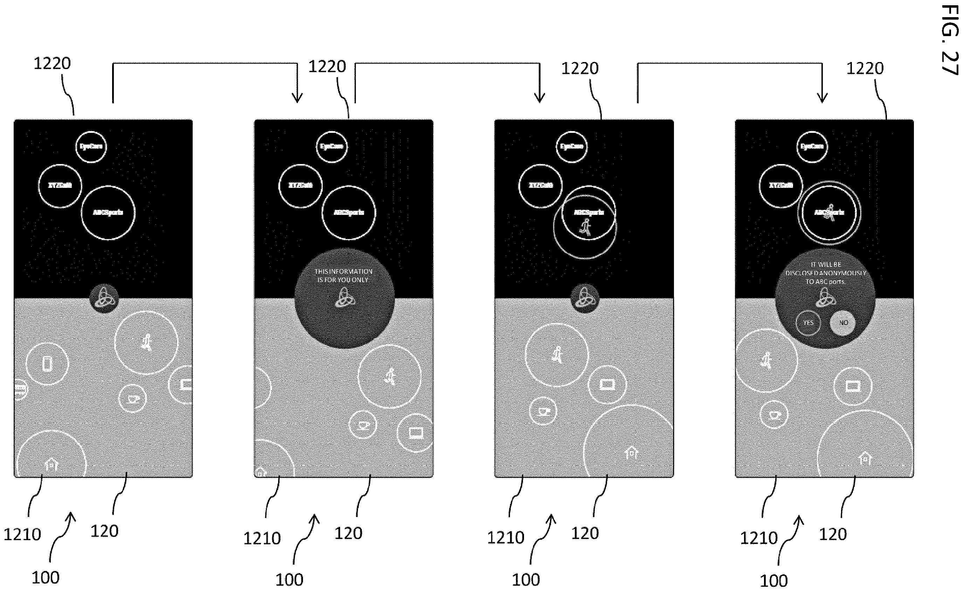

As an example, by tapping a matching candidate displayed in a balloon shape or dragging and dropping the first personal information, the first personal information may be provided to the matching candidate, and the first personal information may be browsed in a company, a country, a local public organization, or the like that is the matching candidate. Furthermore, in a case where the first personal information elements are illustrated in the second screen area 1220 as illustrated in Fig. 27, by dragging and dropping one or a plurality of specific first personal information elements to the matching candidate, the first personal information element selected by the user can be provided to the predetermined matching candidate selected by the user. When this aspect is adopted, it is advantageous in that the first personal information element to be provided can be limited. Note that, in an aspect illustrated in Fig. 27, information regarding running is provided by being dragged and dropped with respect to the matching candidate.

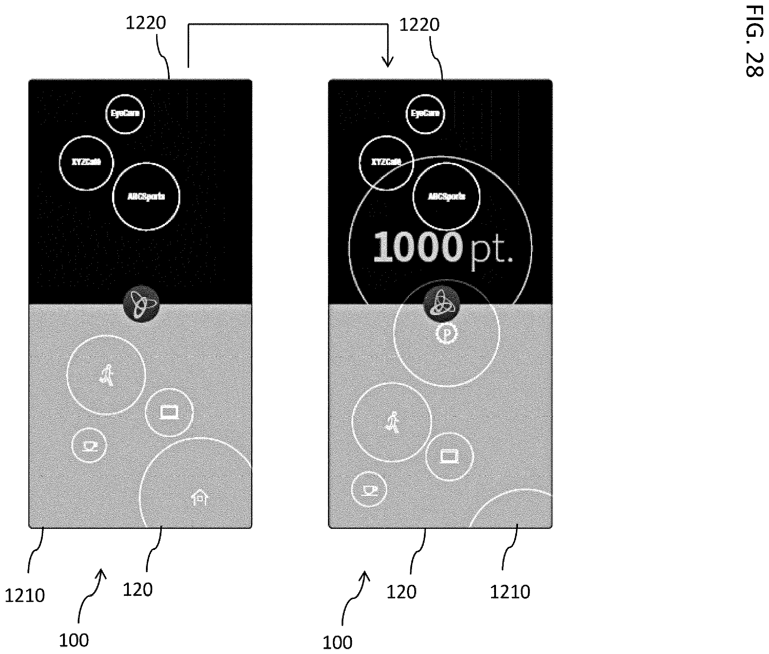

When the user provides the first personal information or the first personal information element to the external user, points or currency such as a point may be granted from the external user as a providing destination to the individual user as a providing source. In an aspect illustrated in Fig. 28, 1000 points are provided from the external user to the individual user. The provision of the first personal information and the first personal information element to the second terminal device 100b of the external user may be performed via a blockchain or may be performed so as to be stored in the device storage unit 280 of the information processing apparatus 200.

Note that a terminal control unit 110 may determine that a stress level of the individual user has increased from various information accumulated in the first terminal device 100a, and the result may be displayed on the operation display unit 120 (see Fig. 29). Then, by carrying the first terminal device 100a or running with the first terminal device on one's side, information on the actual running is stored in a terminal storage unit 180 as the first personal information element. Such information about running may be used as matching as the first personal information, or may be used as the first personal information element browsable by the second terminal device 100b.

In the present embodiment, since the matching is performed on the basis of the first personal information, it is possible to provide highly accurate information matching the request information to the external user.

### Third Embodiment

Next, a third embodiment will be described.

In the present embodiment, the second personal information associated with the first personal information of a first terminal device 100a can be browsed by a second terminal device 100b, and a second matching unit 650 that performs matching on the basis of the second personal information is provided. Other configurations are the same as those of the first embodiment and the second embodiment. Any aspect described in the first embodiment and the second embodiment can be adopted. The members described in the first embodiment and the second embodiment will be described using the same signs.

The present embodiment is different from the second embodiment in that matching is performed using second personal information having a decreased granularity as personal information. The decrease in granularity as the personal information means, for example, as described in the first embodiment, that the second personal information is information that is less likely to be identified as an individual, and the second personal information is information that is less likely to be identified as an individual than the first personal information. Furthermore, the granularity as the personal information can be designated by each user. The second matching unit 650 of the present embodiment is similar to that of the second embodiment, and a matching model may be generated by machine learning. Furthermore, when the first personal information satisfies a requirement specified by the request information, the second matching unit 650 may determine that matching has been performed.

In the present embodiment, since the second personal information browsable by one or a plurality of the second terminal devices 100b is used, it is advantageous in that the external user can output the request information by viewing the browsable second personal information by himself/herself or automatically selecting the second personal information by applying the second personal information to a predetermined model. Note that the external user who can view the second personal information may be limited to a person designated by the user.

Similarly to the first personal information in the second embodiment, the matching by the second matching unit 650 may be performed using the request information and the second personal information output in advance from the external user. Specifically, as a result of applying certain request information and certain second personal information, which are output in advance, to the matching model by the second matching unit 650, in a case where the evaluation is a threshold or more, it may be determined that the certain request information and the certain second personal information match each other. When the matching is determined, the matching candidate may be displayed on an operation display unit 120 of the first terminal device 100a used by the individual user as a matching candidate by the external user. A display aspect, and selection of the first personal information and the first personal information element can adopt the same aspects as in the second embodiment.

Furthermore, in a case where it is determined that certain request information and certain second personal information issued in advance match each other, the information processing apparatus may provide the second personal information to the second terminal device 100b of the external user who has issued the certain request information. In this case, after confirming the content of the second personal information, the external user can determine whether to officially request the first personal information corresponding to the second personal information. In a case where the external user formally requests the first personal information, the request is input from a predetermined terminal such as the second terminal device 100b. When such an input is performed, as described in the second embodiment, the external user may be displayed as a matching candidate on the operation display unit 120 of the first terminal device 100a used by the individual user.

Similarly to the second embodiment, the second matching unit 650 may perform matching using the request information and the first personal information, and provide the second personal information corresponding to the first personal information to the second terminal device 100b of the external user who has obtained the evaluation greater than or equal to the threshold. Also in this case, after confirming the content of the second personal information, the external user may determine whether to officially request the first personal information corresponding to the second personal information.

Each component including the conversion unit 130, the recording unit 160, the first matching unit 150, the terminal control unit 110, and the like of each of the above embodiments may be realized by a logic circuit (hardware) or a dedicated circuit formed in an integrated circuit such as an IC chip or an LSI, or may be realized by software using a CPU, a memory, and the like. Furthermore, each component may be realized by one or a plurality of integrated circuits, and a plurality of components may be realized by one integrated circuit. Similarly, each component including the device control unit 210, the second matching unit 650, the device matching unit 250, and the like may be realized by a logic circuit (hardware) or a dedicated circuit formed in an integrated circuit such as an IC chip or an LSI, or may be realized by software using a CPU, a memory, and the like. Furthermore, each component may be realized by one or a plurality of integrated circuits, and a plurality of components may be realized by one integrated circuit.

The description of the embodiments described above and the disclosure of the figures are merely examples for describing the invention recited in the claims, and the invention recited in the claims is not limited by the description of the embodiments described above or the disclosure of the figures.

### REFERENCE SIGNS LIST

100 device terminal
120 operation display unit
121 operation unit
122 display unit
130 conversion unit
160 recording unit
150 first matching unit (matching unit)
180 terminal storage unit (storage unit)
200 information processing apparatus
250 device matching unit (matching unit)
650 second matching unit (matching unit)

## Claims

1. A terminal device comprising:
a storage unit storing a first personally identifiable information; and
an operation unit for inputting second personally identifiable information that is associated with the first personally identifiable information stored in the storage unit, that has lower specificity than the first personally identifiable information, and that can be browsed at a providing destination,
wherein the terminal device provides the second personally identifiable information to the providing destination.

2. The terminal device according to claim 1,
wherein the first personally identifiable information is associated with a plurality of pieces of second personally identifiable information having different specificities.

3. The terminal device according to claim 1 or 2,
wherein a display can display the first personally identifiable information and the second personally identifiable information simultaneously.

4. The terminal device according to any one of claims 1 to 3 further comprising:
a conversion unit that converts the first personally identifiable information into the second personally identifiable information,
wherein the first personally identifiable information has a plurality of first personal identification elements,
wherein the second personally identifiable information has a plurality of second personal identification elements, and
wherein the conversion unit adjusts a lowness of specificity for each first personal identification element and then convert the first personal identification element into the second personal identification element.

5. The terminal device according to any one of claims 1 to 4,
wherein a display unit can display whether the providing destination is in a state where the second personally identifiable information can be browsed.

6. The terminal device according to any one of claims 1 to 5,
wherein reliability specifying information for indicating whether information from a third party is reliable can be input by the operation unit, and
wherein the reliability specifying information is displayed on a display unit when information is received from the third party using the second personally identifiable information of the third party.

7. The terminal device according to any one of claims 1 to 6 further comprising
a recording unit recording the second personally identifiable information that is encrypted in a blockchain.

8. The terminal device according to any one of claims 1 to 6 further comprising
a transmission unit transmits the second personally identifiable information that is encrypted by an encryption key to an information processing apparatus; and
a recording unit recording the encryption key in a blockchain.

9. The terminal device according to any one of claims 1 to 8,
wherein the first personally identifiable information includes information on an owned device owned by a provider.

10. The terminal device according to any one of claims 1 to 9,
wherein a plurality of pieces of avatar information are associated with a plurality of pieces of second personally identifiable information having different specificities, and
wherein when an operation is performed using a certain avatar information, information is provided using the second personally identifiable information associated with the certain avatar information.

11. The terminal device according to any one of claims 1 to 10,
wherein the second personally identifiable information can be browsed at the providing destination by transmitting the second personally identifiable information to the providing destination, recording the second personally identifiable information in a blockchain, or sharing the second personally identifiable information stored in an information processing apparatus with the providing destination.

12. The terminal device according to any one of claims 1 to 11 further comprising
a recording unit that records the second personally identifiable information in a blockchain or an information processing apparatus.

13. An information processing system comprising the terminal device according to any one of claims 1 to 12,
when shared information including the second personally identifiable information, position information or experience information is provided from a terminal device of a providing source to a terminal device of the providing destination, points or currency is granted from the providing destination to the providing source.

14. An information processing system comprising the terminal device according to any one of claims 1 to 12,
wherein the information processing system control that the second personally identifiable information cannot be browsed at the providing destination in response to an input from the operation unit.

15. An information processing system comprising terminal devices according to any one of claims 1 to 12; and an information processing apparatus,
wherein the information processing apparatus includes a matching unit for performing matching based on the second personally identifiable information that will be provided or that have been provided from the terminal devices when the information processing apparatus receives a ride-sharing request from the terminal devices.

16. An information processing system comprising:
a first terminal device being the terminal device according to any one of claims 1 to 12 and storing first personal information including the first personally identifiable information;
a second terminal device capable of browsing second personal information that is less specific than the first personal information; and
a matching unit that performs matching using the second personal information.

17. An information processing system
wherein a part or all of first personal information stored in a storage unit of a first terminal device is stored in an information processing apparatus or recorded in a blockchain, and
wherein the information processing system comprises a matching unit for performing matching based on request information from a second terminal device and the first personal information stored in the information processing apparatus or recorded in the blockchain.

18. The information processing system according to claim 16 or 17,
wherein when the matching unit determines that matching has been made, information indicating an external user that has provided request information is displayed on a display unit of the first terminal device.

19. The information processing system according to any one of claims 16 to 18,
wherein the first personal information includes a plurality of first personal information elements, and
wherein when the first personal information element is selected in the first terminal device, this first personal information element can be browsed on the second terminal device.

20. A program installed in a terminal device,
the terminal device in which the program is installed comprising:
a storage function for storing a first personally identifiable information; and
an operation function for inputting second personally identifiable information that is associated with the first personally identifiable information stored in the storage function, that has lower specificity than the first personally identifiable information, and that can be browsed at a providing destination,
wherein the terminal device has a function for providing the second personally identifiable information to the providing destination.
